(19) Europäisches Patentamt

European Patent Office

Office européen des brevets

(11) **EP 2 963 273 B1**

## (12) EUROPEAN PATENT SPECIFICATION

(45) Date of publication and mention
of the grant of the patent:
**17.05.2017  Bulletin 2017/20**

(51) Int Cl.:
***F02D 41/10*** *(2006.01)*      ***F02D 41/14*** *(2006.01)*
***F02D 41/30*** *(2006.01)*

(21) Application number: **15169076.5**

(22) Date of filing: **25.05.2015**

(54) **ADJUSTMENT OF A TORQUE REQUESTED FROM AN ENGINE**

EINSTELLUNG EINES VON EINEM MOTOR ANGEFORDERTEN DREHMOMENTS

RÉGLAGE D'UN COUPLE DEMANDÉ PAR UN MOTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.05.2014  SE 1450654**

(43) Date of publication of application:
**06.01.2016  Bulletin 2016/01**

(73) Proprietor: **Scania CV AB
151 87 Södertälje (SE)**

(72) Inventors:
• **EVALDSSON, Martin
131 31 Nacka (SE)**
• **REDBRANDT, Karl
171 63 Solna (SE)**

(74) Representative: **Scania CV AB
Patents, GP 117kv
151 87 Södertälje (SE)**

(56) References cited:
**EP-A1- 2 019 194      WO-A1-2007/012555
WO-A2-2011/003544**

• **BERRIRI M ET AL: "Active damping of automotive
powertrain oscillations by a partial torque
compensator", CONTROL ENGINEERING
PRACTICE, PERGAMON PRESS, OXFORD, GB,
vol. 16, no. 7, 1 July 2008 (2008-07-01), pages
874-883, XP022681084, ISSN: 0967-0661, DOI:
10.1016/J.CONENGPRAC.2007.10.010 [retrieved
on 2007-12-03]**

EP 2 963 273 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to a system arranged for the control of an engine speed $\omega_e$ for an engine in connection with a play in a powertrain in a vehicle according to the preamble to patent claim 1. The present invention also relates to a method for the control of an engine speed $\omega_e$ for an engine in connection with play in a powertrain in a vehicle according to the preamble to patent claim 16, and a computer program and a computer program product, which implement the method according to the invention.

### Background

The following background description constitutes a description of the background to the present invention, which does not, however, necessarily constitute prior art.

Vehicles, such as for example cars, buses and trucks are driven forward by an engine torque produced by an engine in the vehicle. This engine torque is provided to the vehicle's driving wheels through a powertrain in the vehicle. The powertrain contains a range of inertias, torsional compliances and dampening components, meaning that the powertrain, to a varying degree, may have an effect on the engine torque being transferred to the driving wheels. Thus, the powertrain has a torsional compliance/flexibility and a play, which means that oscillations in torque and/or rotational speeds, so called powertrain oscillations, may occur in the vehicle when the vehicle, for example, sets off once a torque has been requested from the engine. These oscillations in torque and/or rotational speeds occur when forces, having been built up in the powertrain in the period between the engine providing the torque and the vehicle moving off, are released as the vehicle moves off. Powertrain oscillations may make the vehicle rock longitudinally, which is described in further detail below. These rocking movements in the vehicle are very disruptive for the driver of the vehicle.

Therefore, in some prior art solutions for avoiding these powertrain oscillations, preventive strategies have been used at the request of the engine torque. Such strategies may utilise limited torque ramps when the engine torque is requested, whereat these torque ramps have been designed so that the requested engine torque is limited in such a way, that the powertrain oscillations are reduced, or do not occur at all. (e.g. Patent literature WO2011/003544)

### Brief description of the invention

The torque ramps which are used today when an engine speed is requested, thus introduce a limit to how the torque may be requested by the engine in the vehicle. This limitation is necessary under the solutions of prior art, in order to reduce the disruptive powertrain oscillations. Allowing the driver and/or, for example, a cruise control to freely request a torque would, with current art systems, often give rise to considerable and disruptive powertrain oscillations, which is why limiting torque ramps are used.

The limiting torque ramps in prior art are normally static. Static torque ramps, which may also be termed static torques, have an advantage in that they are of a very limited complexity, which is one of the reasons why they are so often used. However, static torque ramps have a number of disadvantages, relating to the fact that they are not optimised to all driving modes that the vehicle may be exposed to. For certain driving modes, the static and limited torque ramps give rise to a reduction in vehicle performance, as, due to the torque ramp, the requested torque is unnecessarily low for driving events wherein it would have been possible to request more engine torque without the occurrence of powertrain oscillations. For other driving events, the torque ramp does not limit the requested torque sufficiently, which means that powertrain oscillations occur and therefore rocking movements in the vehicle. Therefore, the use of torque ramps, for certain driving events, provides non-optimal torques, which may give rise to an unnecessary reduction in vehicle performance and/or rocking that reduces comfort, caused by powertrain oscillations.

When ramping down or ramping up, for example during shift operations, the powertrain is relaxed, that is the torsional compliances/springs in the powertrain components are relaxed ahead of the gear change, in order to later be turned up again after the gear change has been performed. There are a number of possible plays that may occur in a powertrain, for example when cogwheels in gears, UV joints or similar do not properly engage at certain reciprocal angles. These plays thus occur in the powertrain, and it is difficult to know in which states these one or several possible plays are. This means that there is a risk that oscillations are initiated in the vehicle, if a torque ramp is requested without the system knowing the state of these plays.

It is one objective of the present invention to provide a method and a system for the control of an engine speed $\omega_e$ for an engine in connection with a play, which method and system at least in part solves these problems.

This objective is achieved through the above-mentioned system in accordance with the characteristics set out in claim 1. The objective is also achieved through the above-mentioned method according to the characterising portion of claim 16, and the above mentioned computer program and computer program product.

The present invention relates to a method and a system, arranged for the control of an engine speed $\omega_e$ for an engine, in connection with a play in a powertrain in a vehicle. According to the present invention, a current rotational speed difference $\Delta\omega_{pres}$ is determined between a first end of the powertrain, which rotates with a first rotational speed $\omega_1$, and a second end of the powertrain which rotates with a second rotational speed $\omega_2$. Furthermore, a speed difference $\Delta\omega_{after}$ is determined, which has to prevail between the first end and the second end after the play. The speed difference $\Delta\omega_{after}$ after the play is determined based on a spring constant $k$ related to a torsional compliance in the powertrain. The control of the engine speed $\omega_e$ for the engine is then performed for such time period $T_{glapp}$, during which the play in the powertrain prevails. This control is based on the determined current rotational speed difference $\Delta\omega_{pres}$ and the determined rotational speed difference $\Delta\omega_{after}$ after the play.

By utilising the present invention, a change of the engine speed $\omega_e$ during the play in the powertrain is achieved. When the powertrain is in the time period $T_{glapp}$, during which the play in the powertrain prevails, the engine provides no dynamic torque $Tq_{fw}$ to the driving wheels, making it impossible to achieve changes in the time derivative $\dot{Tq}_{fw}$ of the dynamic torque during the play, as the dynamic torque $Tq_{fw}$ substantially has the value zero (0) during the play.

According to the present invention, the engine speed $\omega_e$ is controlled in order to ensure that a desired speed difference $\Delta\omega_{after}$ will be provided after the play, providing the ramp after the play with the desired gradient. Therefore, a suitable initial direction/gradient is provided for the dynamic torque, which may then be used as suitable entry values for further adjustment of the dynamic torque $Tq_{fw}$. Through the current invention, this suitable initial gradient/derivative may be provided immediately when the cogs engage with each other, i.e. when they grip each other, in the gearbox after a shift operation.

Changes in the engine speed $\omega_e$ during the play do not impact the operation of the vehicle, as there is a play in the powertrain. Therefore, according to one embodiment of the present invention, significant changes $\Delta Tq_{demand}$ in the requested torque, for example in the form of torque spikes, may be used to control the engine speed $\omega_e$.

By using the present invention, a controlled rotation into place in the play is achieved, which is suitable for use, for example, in connection with a gear selection and/or the engaging of the clutch in the vehicle.

Therefore, the present invention provides a quick and comfortable performance increase in the powertrain, where the full ramp gradient may be provided immediately once the play has been completed. In prior art, the ramp following the play must first increase slowly, and steepen later, which may be avoided with the present invention.

Based on the knowledge of a spring constant $k$ related to a torsional compliance in the powertrain, the system according to the present invention may therefore calculate what rotational speed difference $\Delta\omega_{after}$ has to exist in the powertrain after the play, in order for the play to rotate into place comfortably.

If the gear is engaged with a non-slipping clutch, the correct ramp gradient may be achieved directly when the cogs engage with each other, once the desired rotational speed difference $\Delta\omega_{after}$, when the play is thus rotated into position, prevails. The play will then be passed at a set speed.

When the control of the engine speed $\omega_e$ according to the present invention is used, the profile of the requested torque $Tq_{demand}$ is formed in such a manner that the dynamic torque $Tq_{fw}$ has an, at least in part, even and non-oscillating profile, or does at least provide oscillations with substantially lower amplitudes than prior art solutions. The present invention results in oscillations that do not have a negative impact on the comfort in the vehicle.

In this way, powertrain oscillations may be reduced in number and/or size for a number of driving modes, wherein previous adjustments of the requested torque $Tq_{demand}$ would have resulted in problematic rocking of the vehicle. These driving modes comprise a commencement of a request for a torque from the engine, a so-called "TIPIN", and a ceasing of a request for a torque from the engine, a so-called "TIPOUT". Also, at the above mentioned driving mode comprising a play in the powertrain - that is to say when, for example, the cogs of two cogwheels in the gearbox for a brief period of time do not engage, in order to later engage again, which may, for example, occur in the transition between dragging of the engine and acceleration/request of torque, when engaging the clutch or during the above mentioned shift operation -, the present invention reduces powertrain oscillations. Therefore, for all these driving events the present invention may prevent rocking of the vehicle caused by powertrain oscillations, whereby the driver's comfort is increased.

Powertrain oscillations caused by external impact, for example caused by a bump in the road, may also quickly be reduced and/or dampened with the present invention.

Furthermore, the use of the present invention also provides a significant reduction in the wear of the powertrain of the vehicle. The reduction in the wear, achieved by the invention, provides an extended life for the powertrain, which of course is advantageous.

**Brief list of figures**

The invention will be illustrated in more detail below, along with the enclosed drawings, where similar references are used for similar parts, and where:

Figure 1 shows an example vehicle,

Figure 2 shows a flow chart for a method according to one embodiment of the present the invention,

Figure 3 shows a control device, in which a method according to the present invention may be implemented.

Figures 4a-b schematically show block diagrams for prior art fuel injection systems and for fuel injection systems comprising a control system according to the present invention;

Figure 5 shows a driving event where the control according to the present invention is applied,

Figures 6a-c schematically illustrate a play in the powertrain.

**Description of preferred embodiments**

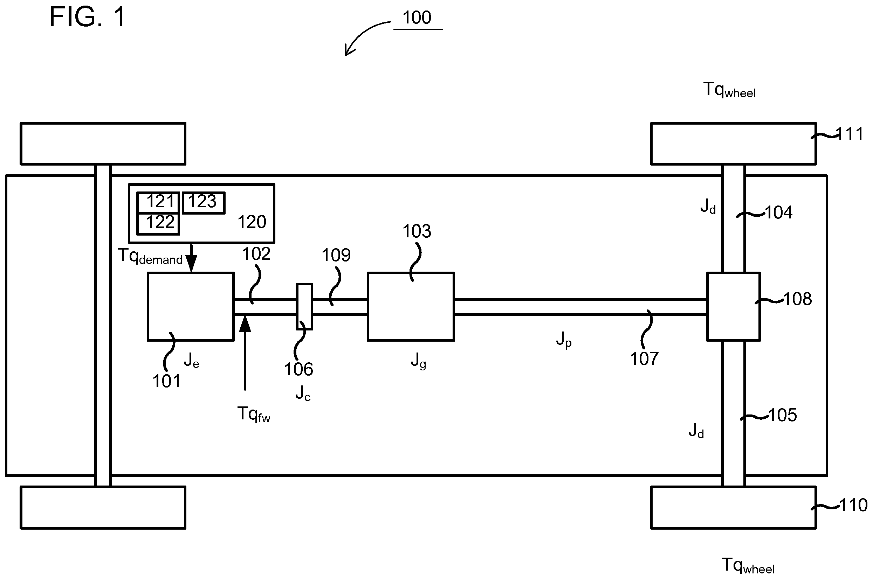

Figure 1 schematically shows a heavy example vehicle 100, such as a truck, a bus or similar, which will be used to explain the present invention. The present invention is, however, not limited to use in heavy goods vehicles, but may also be used in lighter vehicles such as passenger cars. The vehicle 100 shown schematically in Figure 1 comprises a pair of driving wheels 110, 111. The vehicle furthermore comprises a powertrain with an engine 101, which may for example be a combustion engine, an electric motor or a combination of these, a so called hybrid. The engine 101 may, for example, in a customary fashion, via an output shaft 102 on the engine 101, be connected with a gearbox 103, possibly via a clutch 106 and an input shaft 109 connected to the gearbox 103. An output shaft 107 from the gearbox 103, also known as a propeller shaft, drives the driving wheels 110, 111 via a final gear 108, such as e.g. a customary differential, and drive shafts 104, 105 connected with said final gear 108. A control device 120 is schematically illustrated as providing control signals to the engine 101. As described below, the control device may comprise a first 121 and a second 122 determining device and an engine speed control device 123. These devices are described in more detail below.

When a driver of the motor vehicle 100 increases a torque request to the engine 101, for example by inputting via an input means, such as the depressing of an accelerator pedal, this may result in a relatively rapid change in the powertrain's torque. This torque is resisted by the driving wheels 110, 111, due to their friction against the ground and the rolling resistance of the motor vehicle. The drive shafts 104, 105 are hereby exposed to a relatively severe torque.

For reasons of cost and weight, among others, the drive shafts 104, 105 are not normally dimensioned to cope with this severe stress without being impacted. In other words, the drive shafts 104, 105 have a relatively large torsional compliance. The propeller shaft 107 may also have a relatively large torsional compliance. The other components of the drive shaft may also have some form of torsional compliance. Due to the relative torsional compliance of the drive shafts 104, 105, they act as torsion springs between the drive shafts 110, 111 and the final gear 108. In the same way, the other torsional compliances in the powertrain also act as torsion springs between the location of the various components and the driving wheels 110, 111. Once the rolling resistance of the vehicle no longer manages to hold back the torque from the powertrain, the motor vehicle 100 will start to roll, whereby the force in the drive shafts 104, 105 acting as a torsion spring will be released. When the motor vehicle 100 starts to set off, this released force may cause powertrain oscillations, meaning that the motor vehicle starts to rock in a longitudinal direction, i.e. in the driving direction. The driver of the motor vehicle experiences this rocking as very uncomfortable. To a driver, a soft and comfortable driving experience is desirable, and when such a comfortable driving experience is achieved, this give a sense of the motor vehicle being a refined and well developed product. Therefore, uncomfortable powertrain oscillations should if possible be avoided.

The present invention relates to the control of a torque requested from the engine 101 $Tq_{demand}$ requested from the engine 101. The engine 101 provides a dynamic torque $Tq_{fw}$ in response to a torque requested from the engine $Tq_{demand}$, where this dynamic torque $Tq_{fw}$ constitutes a torque at the flywheel connecting the engine 101 to its output shaft 102. This dynamic torque is the torque $Tq_{fw}$ which, through a gear ratio $i$ for the powertrain, relates to a dynamic wheel torque $Tq_{wheel}$ supplied to the driving wheels 110, 111 of the vehicle. The gear ratio $i$ here constitutes the total gear ratio of the powertrain, comprising, for example, the gearbox ratio for a specific gear. In other words, a requested engine torque $Tq_{demand}$ results in a dynamic wheel torque $Tq_{wheel}$ at the vehicle's driving wheels 110, 111.

The present invention relates to a method and a system, arranged for the control of an engine speed $\omega_e$ for an engine in connection with play in a powertrain in a vehicle. According to the present invention, a current rotational speed difference $\Delta\omega_{pres}$ is determined between a first end of the powertrain, rotating with a first rotational speed $\omega_1$, and a second end of the powertrain, rotating with a second rotational speed $\omega_2$. Furthermore, a rotational speed difference $\Delta\omega_{after}$, which has to prevail between the first end and the second end after the play, is determined. The speed difference $\Delta\omega_{after}$ after the play is determined based on a spring constant $k$, related to a torsional compliance in the powertrain. The control of the engine speed $\omega_e$ for the engine is then implemented across a time period $T_{glapp}$, during which the play in the powertrain prevails. This control is based on the determined current rotational speed difference $\Delta\omega_{pres}$ and the determined rotational speed difference $\Delta\omega_{after}$ after the play.

4

The control of the engine speed $\omega_e$ for the engine in connection with the play, may be performed by a system comprising a first 121 and a second 122 determining device and an engine speed determining device 123.

The first determining device 121 determines a current rotational speed difference $\Delta\omega_{pres}$ between a first end of the powertrain, rotating with a first rotational speed $\omega_1$, and a second end of the powertrain, rotating with a second rotational speed $\omega_2$. The second determining device 122 determines a rotational speed difference $\Delta\omega_{after}$, which has to prevail between the first end and the second end after the play. The rotational speed difference $\Delta\omega_{after}$ after the play is determined based on a spring constant $k$, related to a torsional compliance in the powertrain. The engine speed determining device 123 then performs the control of the engine speed $\omega_e$ for the engine, during a period of time $T_{glapp}$ when the play in the powertrain prevails. This control is based on the determined current rotational speed difference $\Delta\omega_{pres}$, and the determined rotational speed difference $\Delta\omega_{after}$ after the play.

In addition, the invention relates to a motor vehicle 100, e.g. a car, truck or bus, comprising at least one system for the control of an engine speed $\omega_e$ for an engine in connection with a play.

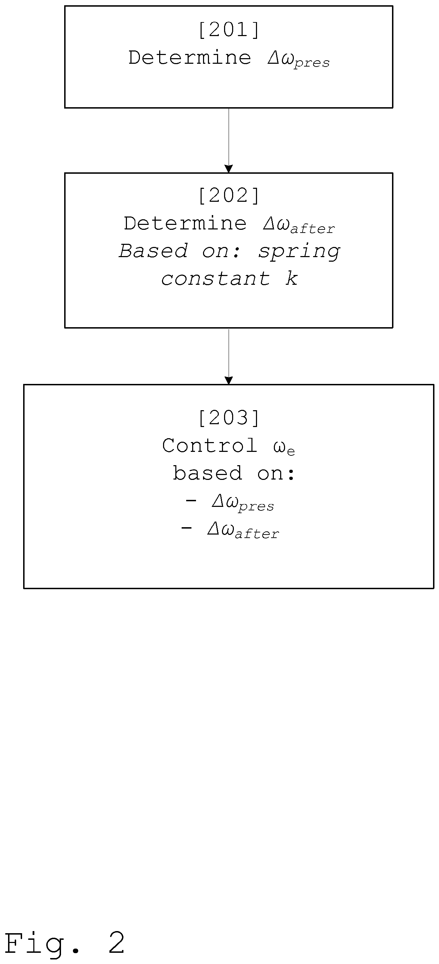

Figure 2 shows a flow chart for the method for the control of the engine speed $\omega_e$ for the engine during a certain period of time $T_{glapp}$.

In a first step 201, for example using a first determining device 121, a current rotational speed difference $\Delta\omega_{pres}$ is determined between a first end of the powertrain, rotating with a first rotational speed $\omega_1$, and a second end of the powertrain, rotating with a second rotational speed $\omega_2$.

In a second step 202, for example using a second determining device 122, a rotational speed difference $\Delta\omega_{after}$ is determined, which has to prevail between the first end and the second end after the play. The rotational speed difference $\Delta\omega_{after}$ after the play is determined, among others, based on a spring constant $k$, related to a torsional compliance in the powertrain.

In a third step 203, the engine speed $\omega_e$ is controlled, for example by means of an engine speed determining unit 123, for the engine for a period of time $T_{glapp}$, during which the play in the powertrain prevails. This control is based on the determined current rotational difference $\Delta\omega_{pres}$ and the determined rotational speed difference $\Delta\omega_{after}$ after the play.

By utilising the present invention, a change of the engine speed $\omega_e$ during the play in the powertrain is thus achieved. When the powertrain is in the time period $T_{glapp}$, during which the play in the powertrain prevails, the engine 101 does not provide a dynamic torque $Tq_{fw}$ to the driving wheels. In other words, the time period $T_{glapp}$ for the play starts at a point in time, when the engine 101 ceases to provide a dynamic torque $Tq_{fw}$ to the driving wheels. The end of the time period $T_{glapp}$ is harder to determine exactly, as a certain degree of randomness decides when the gear will be engaged, that is when the cog wheels in the gearbox will engage with each other.

A play in the powertrain may, for example, precede a ramping up or a ramping down of a dynamic torque $Tq_{fw}$ after a shift operation in a gearbox in the vehicle, and/or may precede a ramping up of a dynamic torque $Tq_{fw}$ after the release of a clutch 106 in the vehicle 100.

It is not possible to achieve changes to time derivatives $\dot{T}q_{fw}$ for the dynamic torque during the play, as the dynamic torque $Tq_{fw}$ substantially has the value (0) during the play. In other words, the desired direction/gradient of a graph corresponding to the time derivative $\dot{T}q_{fw}$ may not be achieved during the play. These problems are solved by the present invention, which instead uses the control of the engine speed $\omega_e$ to ensure that a desired rotational speed difference $\Delta\omega_{after}$ will be provided after the play. Providing a certain rotational speed difference $\Delta\omega_{after}$ after the play also ensures that the ramp after the play has the correct gradient, as the gradient of the ramp is dependent on the rotational speed difference $\Delta\omega_{after}$. Therefore, by using the present invention a suitable initial direction/gradient, that is, a time derivative $\dot{T}q_{fw}$ for the dynamic torque, may be provided, which may then be used as suitable entry values for further adjustment of the dynamic torque $Tq_{f}w$.

The changes in the engine speed $\omega_e$ for the dynamic torque may, with the use of the present invention, be made substantially instantaneously, which means that the adjustment of the engine speed $\omega_e$ towards the desired rotational speed difference $\Delta\omega_{after}$ after the play may be optimised, in order to increase the performance of the vehicle and/or the driver comfort.

The present invention uses the play, so that changes in the engine speed $\omega_e$ do not impact the operation of the vehicle, due to there being a play in the powertrain. It is therefore possible, during the play, to request substantially arbitrary changes of the torque $\Delta Tq_{demand}$ requested from the engine, without this impacting the comfort or the performance of the vehicle, as the requested torque will not be supplied to the driving wheels during the play. It is therefore possible to use significant changes in the requested torque $\Delta\omega q_{demand}$, for example in the form of torque spikes, to control the rotational speed $\omega_e$.

Prior art has controlled the static torque in the vehicle, which has caused powertrain oscillations. By using the present invention, the dynamic torque $Tq_{fw}$ may be controlled instead, which means that powertrain oscillations may be reduced considerably. The reduction in powertrain oscillations increases the driver comfort in the vehicle. In other words, a physical torque, which is the result of fuel being injected into the engine and the response by the powertrain due to its characteristics, is here controlled, this being the dynamic torque $Tq_{fw}$. The dynamic torque $Tq_{fw}$ therefore corresponds to the torque that is provided by the gearbox 103, which also may be expressed as the torque that is provided by a flywheel in the powertrain, whereat the influence from the powertrain, such as the engine's acceleration and its effect, is comprised within the dynamic torque $Tq_{fw}$. Thus, a physical adjustment of the dynamic torque $Tq_{fw}$ is achieved when the present invention is used.

The dynamic torque $Tq_{fw}$ may for example be controlled in order to achieve specific torque ramps, such as ramping down or up after shift operations in the gearbox 103. The dynamic torque $Tq_{fw}$ may also be controlled in order to achieve desired specific torque values, which is useful for example for cruise control, that is to say the use of a cruise control device for the control of the speed of the vehicle, or for pedal driving, that is to say manual control of the vehicle speed.

The dynamic torque $Tq_{fw}$, provided by the engine 101 to its output shaft 102, may in one embodiment be determined based on a delayed requested engine torque $Tq_{demand\_delay}$, the rotational inertia $J_e$ of the engine and the rotational acceleration $\dot{\omega}_e$ for the engine 101.

The delayed requested engine torque $Tq_{demand\_delay}$ has been delayed with the period of time $t_{inj}$ needed to execute an injection of fuel into the engine 101, i.e. the period of time it takes from the start of the injection until the fuel is ignited and combusted. This injection period $t_{inj}$ is typically known, but its length varies, for example for different engines and/or for different engine speeds of an engine. The dynamic torque $Tq_{fw}$ may here be determined as a difference between estimated values for a delayed requested engine torque $Tq_{demand\_delay}$ and torque values $J_e\dot{\omega}_e$ comprising measured values for rotational acceleration $\dot{\omega}_e$ for the engine. In one embodiment, the dynamic torque $Tq_{fw}$ may therefore be represented by a signal difference between a signal for an estimated delayed requested engine torque $Tq_{demand\_delay}$ and a torque signal $J_e\dot{\omega}_e$ comprising measured values for rotational acceleration $\dot{\omega}_e$ for the engine.

The delayed requested engine torque $Tq_{demand\_delay}$ may in one embodiment be defined as a net torque, meaning that losses and/or frictions are compensated, whereby a requested net engine torque and a delayed requested engine torque are achieved.

The dynamic torque $Tq_{fw}$, as provided by the engine 101 to its output shaft 102, thus corresponds, according to one embodiment, to the delayed requested engine torque $Tq_{demand\_delay}$ less a torque corresponding to the engine's rotational inertia $J_e$, multiplied with a rotational acceleration $\dot{\omega}_e$ for the engine 101, i.e. $Tq_{fw} = Tq_{demand\_delay} \, J_e\dot{\omega}_e$, the delayed requested engine speed $Tq_{demand\_delay}$ having been delayed by the injection time $t_{inj}$. The rotational acceleration $\dot{\omega}_e$ for the engine 101 may here be measured by generating a time derivative of the engine speed $\omega_e$. The rotational acceleration $\dot{\omega}_e$ is then rescaled to a torque in accordance with Newton's second law, by being multiplied with the rotational inertia moment $J_e$ for the engine 101, $J_e\dot{\omega}_e$.

According to another embodiment, the dynamic torque $Tq_{fw}$ provided by the engine 101 may also be determined by the use of a torque sensor being placed at a suitable position along the vehicle's powertrain. Thus, a torque value measured by such a sensor may also be used in the feedback according to the present invention. Such a measured torque, which has been obtained by means of a torque sensor after the flywheel, i.e. somewhere between the flywheel and the driving wheels, corresponds to the physical torque that the dynamic engine torque $Tq_{fw}$ contributes. If a good torque reporting may be achieved by means of the use of such a torque sensor, the torque sensor should therefore provide a torque signal corresponding to the dynamic torque $Tq_{fw}$.

As is illustrated in Figure 1, the different parts of the powertrain have different rotational inertias, comprising a rotational inertia $J_e$ for the engine 101, a rotational inertia $J_g$ for the gearbox 103, a rotational inertia $J_c$ for the clutch 106, a rotational inertia $J_p$ for the propeller shaft and rotational inertias $J_d$ for each drive shaft 104, 105. Generally speaking, all rotating bodies have a rotational inertia, $J$, which depends on the mass of the body and the distance of the mass from the rotational centre. For reasons of clarity, in Figure 1, only the above-mentioned rotational inertias have been added, and their significance for the present invention will be described hereafter. A person skilled in the art does, however, realise that more moments of inertia may occur in a powertrain than those listed here.

According to one embodiment of the present invention, the assumption is made that the rotational inertia $J_e$ of the engine 101 is much greater than other rotational inertias in the powertrain, and that the rotational inertia $J_e$ of the engine 101 therefore dominates a total rotational inertia $J$ of the powertrain. That is to say $J = J_e + J_g + J_c + J_p + 2J_d$, but as $J_e \gg J_g$, $J_e \gg J_c$, $J_e \gg J_p$, $J_e \gg J_d$ the total rotational inertia $J$ of the powertrain is more or less equal to the rotational inertia $J_e$ of the engine 101; $J \approx J_e$. A non-limiting example of the values for these rotational inertias may be mentioned: $J_e = 4\text{kgm}^2$, $J_g = 0.2\text{kgm}^2$, $J_c = 0.1\text{kgm}^2$, $J_p = 7 * 10^{-4}\text{kgm}^2$, $J_d = 5 * 10^{-5}\text{kgm}^2$, which means that the assumption that the rotational inertia $J_e$ of the engine 101 dominates the total rotational inertia $J$ of the powertrain; i.e. $J \approx J_e$; is correct, as the other parts of the powertrain are much easier to rotate compared with the engine 101. The aforementioned example values are values on the engine side of the gearbox, which means that they will vary along the powertrain depending on the gear ratio used. Regardless of which gear ratio is being used, the rotational inertia $J_e$ of the engine 101 is much greater than other rotational inertias, and therefore dominates the total rotational inertia $J$ of the powertrain.

As the rotational inertia $J_e$ of the engine dominates the total rotational inertia $J$ of the powertrain; i.e. $J \approx J_e$; the dynamic wheel torque $Tq_{wheel}$ corresponds to the dynamic torque provided by the engine, $Tq_{fw}$, multiplied with the gear ratio for the powertrain $i$, $Tq_{wheel} = Tq_{fw} * i$. This simplifies the adjustment of the requested torque $Tq_{demand}$ according to the present invention, as it is therefore very easy to determine the dynamic torque $Tq_{wheel}$ at the wheels. Hereby, the control of the requested torque $Tq_{demand}$ according to the present invention may continuously be adjusted to the dynamic torque $Tq_{wheel}$ provided to the wheels, which means that powertrain oscillations may be reduced significantly, or even be avoided completely. The engine torque $Tq_{demand}$ may then be requested, in such a way that a desired dynamic torque $Tq_{wheel}$ is continuously provided to the wheels, which means that an even speed profile is achieved for the dynamic torque of the wheels $Tq_{wheel}$, and that no oscillations occur in the wheels' speed profile, or that they have a considerably lower amplitude than in prior art adjustments of the requested engine torque $Tq_{demand}$.

The powertrain may be approximated as a relatively weak spring, which may be described as:

$$Tq_{fw} = Tq_{demand\_delay} - J_e \dot{\omega}_e = k(\theta_e - \theta_{wheel}) + c(\omega_e - \omega_{wheel}),$$

(equation 1)

where:

- $\theta_e$ is an angle for the engine's output shaft 102, i.e. a total increase of the engines performance since a starting point. For example, the angle is $\theta_e$ 1000 revs, which corresponds to 1000*2$\pi$ radians, if the engine has been running for a minute at the engine speed 1000 rpm;

- $\omega_e$ is the time derivative of $\theta_e$, i.e. a rotational speed for the shaft 102;

- $\theta_{wheel}$ is an angle for one or more of the driving wheels 110, 111, i.e. a total performance increase of the wheels since a starting time;

- $\omega_{wheel}$ is the time derivative of $\theta_{wheel}$, that is a rotational speed for the wheels;

- $k$ is a spring constant, which is related to a torque required for turning up the spring in order to achieve a certain gradient, for example in order to obtain a certain difference $\Delta\theta$ between $\theta_e$ and $\theta_{wheel}$. A low value for the spring constant $k$ corresponds to a weak and swaying spring/powertrain;

- $c$ is a dampening constant for the spring.

A derivation of equation 1 gives:

$$\dot{Tq}_{fw} = k(\omega_e - \omega_{wheel}) + c(\dot{\omega}_e - \dot{\omega}_{wheel}) \qquad \text{(equation 2)}$$

It is reasonable to assume that the powertrain often may be considered as an undampened spring, i.e. that $c = 0$, and that the spring constant $k$ is dominated by the spring constant $k_{drive}$ for the drive shafts 104, 105, i.e. $k = \frac{k_{drive}}{i^2}$, where $i$ is the gear ratio. If $c = 0$, then equation 2 is simplified as:

$$\dot{Tq}_{fw} = k(\omega_e - \omega_{wheel}) \qquad \text{(equation 3)}$$

As stated in equation 3, the derivative, that is the gradient, for the dynamic torque $Tq_{fw}$ may be considered to be proportional to the difference $\Delta\omega$ in the rotational speed $\omega_{wheel}$ for the wheels 110, 111 and $\omega_e$ for the engine/shaft 102.

This also means that a desired torque ramp $\dot{Tq}_{fw\_req}$, that is a torque with a gradient and therefore changes in value over time, may be achieved by introducing a difference $\Delta\omega$ in the rotational speed $\omega_{wheel}$ of the wheels 110, 111 and in $\omega_e$ of the engine/shaft 102 ; $\Delta\omega = \omega_e - \omega_{wheel}$ :

$$\omega_{ref} = \omega_{wheel} + \frac{\dot{Tq}_{fw\_req}}{k}; \qquad \text{(equation 4)}$$

where $\omega_{ref}$ is the reference value to be requested from engine 101 in order to achieve the torque ramp.

The difference in the rotational speed $\Delta\omega$ has for the equations 1-4 been described as a difference between

the rotational speeds $\omega_{wheel}$ of the wheels 110, 111 and of the engine/shaft $\omega_e$. However, it must be realised that the difference $\Delta\omega$ in more general terms may be described as a difference in rotational speed between a first end of the powertrain, rotating with a first rotational speed $\omega_1$ and a second end of the powertrain, rotating with a second speed $\omega_2$; $\Delta\omega = \omega_1 - \omega_2$, where the first end, for example, may be a part of the engine 101 or the output shaft 102 from the engine, and the second end, for example, may be the driving wheels 110, 111 or drive shafts 104, 105. As stated above, a time derivative/gradient for the dynamic torque is proportional to a current rotational speed difference $\Delta\omega_{pres}$ between the first rotational speed $\omega_1$ and the second rotational speed $\omega_2$.

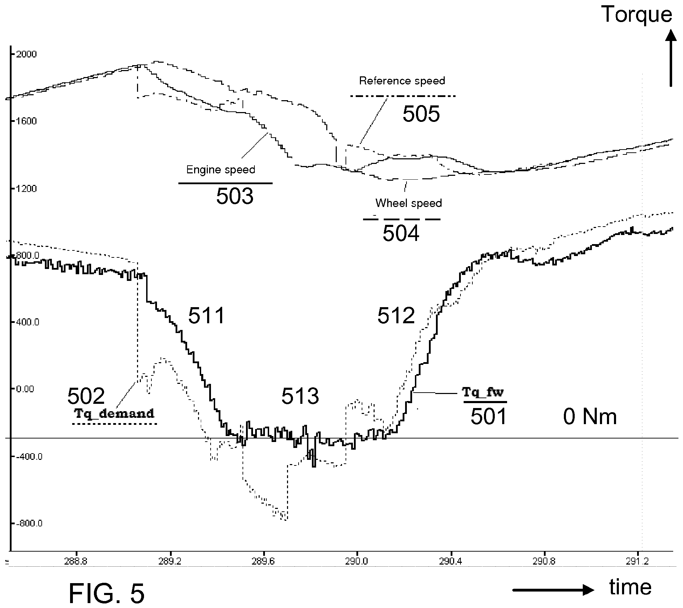

According to one embodiment of the present invention, the play occurs at a shift operation in the gearbox 103. The control of the engine speed $\omega_e$ according to the embodiment is therefore performed in connection with this shift operation. This is illustrated schematically in Figure 5. Figure 5 shows a control according to the present invention for a driving event comprising a play 513 in connection with, for example, a shift operation in the vehicle.

In Figure 5, the engine speed is shown in the left y-axis. The torque graph has an increasing value upwards, which is indicated by the arrow on the right side of the figure. The torque 0 Nm (the play) is marked by the horizontal line in the figure. Time is shown in the x-axis.

The graph 501 (line graph) shows the dynamic torque $Tq_{fw}$ resulting from the control. The graph 502 (dotted line graph) shows the requested torque $Tq_{demand}$. The graph 503 (line graph) shows the rotational speed of the engine $\omega_e$. The graph 504 (dashed) shows the rotational speed of the wheels $\omega_{wheel}$. The dynamic torque $Tq_{fw}$ is thus substantially 0 Nm for the play 513 during the time period 289.5-290.2 sec in the figure, and has then to be ramped up to 512 after the play with a determined derivative. The ramping down is started with a relatively significant change of the torque $\Delta Tq_{demand}$ requested from the engine, whereafter a torque difference $\Delta\omega$ prevails during the ramping down.

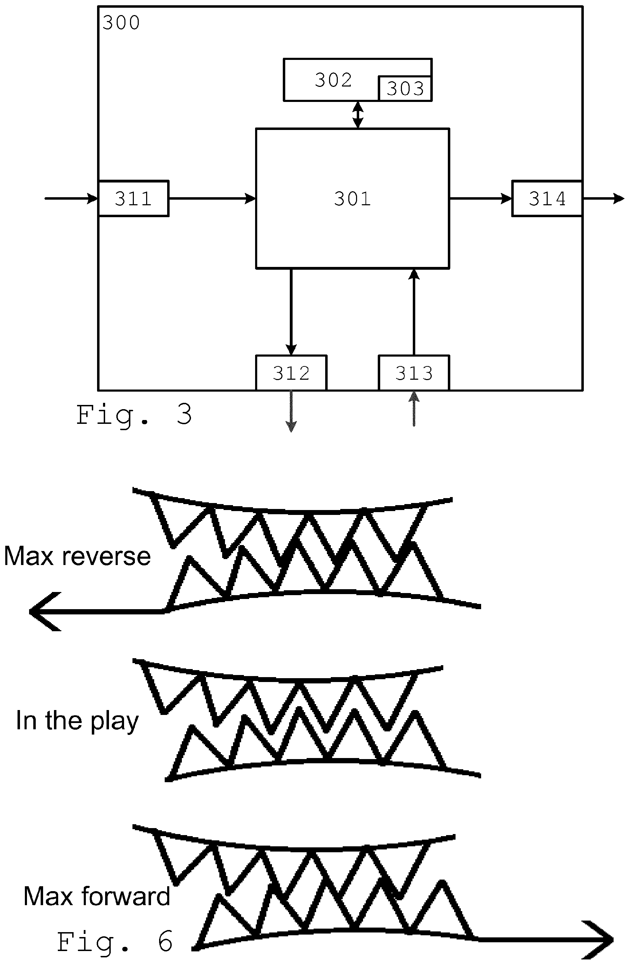

The shift operation may take place during the play 513, wherein a target gear is engaged, for example controlled by a control system for gear selection, when the engine speed $\omega_e$ is substantially synchronous with an engine speed $\omega_{e\_new\_gear}$ for the target gear. As mentioned above, a play may, for example, occur at a transition between dragging the engine and acceleration/torque request, when engaging the clutch, or during a shift operation. The position of the cogwheels in relation to each other during and outside of the play is schematically illustrated in the Figures 6a-c. The cogs in the cog wheels make contact in a first shaft position, during rotation in a first direction, as illustrated in Figure 6a, in a position corresponding to a maximum backward turn. The cogs in the cogwheels make contact in a second shaft position, during rotation in a second direction, as illustrated in Figure 6c, in a position corresponding to a maximum forward turn. Therefore, the cogs are engaged in both these positions (Figures 6a and 6c respectively), which also means that the play is rotated backwards and forwards respectively. The play for the powertrain is made up of the angle between the first and second shaft position, where the cogs are not engaged, i.e. in a position corresponding to a turning in the play, illustrated in Figure 6b, between the times $t_{start\_glapp}$ and $t_{slut\_glapp}$. Therefore, no torque is transferred during the play.

One way to determine the magnitude of the play angle $\theta_{glapp}$ is by means of physically turning a shaft in the powertrain, for example the gearbox input shaft 109 or the gearbox output shaft 107. If the input shaft 109 is turned, the play of the entire powertrain is included, that is including plays in all gears such as in the gearbox, the final gear 108 and any other gears in the powertrain. If instead the output shaft 107 is turned, then only plays after the gearbox are included, i.e. the play in the final gear is included, but the play in the gearbox is excluded. Therefore, turning the gearbox input shaft 109 provides a more comprehensive idea of the play. However, it may here be noted that the play of the final gear often dominates the play in the powertrain, and is also geared to the engine with the gear position in the gearbox, which is why turning the output shaft 107 in some cases provides a sufficient accuracy when determining the play angle.

When turning, the point at which the cogs engage ("max backwards" or "max forwards") and release each other ("in the play"), respectively, is registered, which provides the first and the second gear position at the start and the end of the play, respectively. This turning and registration of the size of the play angle $\theta_{glapp}$ may advantageously be carried out for the different gear positions in the gearbox. The determining of the size of the play angle $\theta_{glapp}$ may, for example, be performed in connection with the assembly of the vehicle, i.e. before it is commissioned, but may also be done after it has been commissioned.

Once the size of the play angle $\theta_{glapp}$ has been determined, for example for each of the gears in the gearbox, the size of the play angle $\theta_{glapp}$ may be stored in a memory, for example in the control device 120 in the vehicle.

According to one embodiment of the present invention, the size of the play angle $\theta_{glapp}$ is determined by means of calculations based on one or more rotational speed differences $\Delta\omega$ during one or more plays, whereat the size of the play angle $\theta_{glapp}$ may be calculated as an integration, or a corresponding sum, of the rotational speed difference $\Delta\omega$

across the play; $\theta_{glapp} = \int_{t_{start\_glapp}}^{t_{slut\_glapp}} \Delta\omega$. This quantity $\theta_{glapp}$ may here, for example, be calculated several times for one or more plays, whereafter an averaging, or similar, of the calculated values provides a final value for the quantity $\theta_{glapp}$.

The engine speed $\omega_e$ is then controlled, for example by means of the speed control unit 123, when the engaging of the gear has been confirmed/acknowledged by the control system for gear selection, which results in the determined

rotational speed difference, $\Delta\omega_{after}$, which has been determined to have to exist between the first end of the powertrain $\omega_1$ and its second end $\omega_2$ after the play. This control may be performed, for example, on a geared speed $\omega_{wheel}$ for at least one driving wheel. This control may be achieved by the use of one or more significant changes $\Delta Tq_{demand}$ of the requested torque, as is evident from the figure.

The play is then overcome with the rotational speed difference $\Delta\omega_{after}$, whereat the dynamic torque $Tq_{fw}$ corresponds to the rotational speed difference $\Delta\omega_{after}$ through a ramping up or down of the dynamic torque $Tq_{fw}$. By using the determined rotational speed difference $\Delta\omega_{after}$, which has been determined as having to prevail after the play 513, a rotation into position of the play is here achieved. The rotational speed difference $\Delta\omega_{after}$ between the rotational speed $\omega_e$ of the engine 503 and the rotational speed $\omega_{wheel}$ of the wheels 504 after the play 513 is clearly evident from the figure.

As is evident from the figure, by using the present invention a relatively significant change $\Delta Tq_{demand}$ of the torque requested from the engine is created at the end of the play 513 and the time point 290.0 seconds. This significant change $\Delta Tq_{demand}$ means that the engine speed $\omega_e$ rapidly approaches the reference speed $\omega_{ref}$ 505 (dot-dash line), which is to be requested from the engine in order to obtain the torque ramp 512. This way, the engine obtains the correct engine speed $\omega_e$ when the play has rotated into position and the ramping 512 has commenced, i.e. when the dynamic torque $Tq_{fw}$ starts to increase and is ramped upwards 512.

The rotational speed difference $\Delta\omega_{after}$ after the play 513 is thus achieved by the control of the engine speed $\omega_e$. The rotational speed difference $\Delta\omega_{after}$ results in a ramping, in Figure 5 exemplified as a positive ramping 512, of the dynamic torque $Tq_{fw}$, where the ramping has a gradient, i.e. the dynamic torque $Tq_{fw}$ has a time derivative which is substantially proportional to the rotational speed difference $\Delta\omega_{after}$.

As described above, the engine speed $\omega_e$ is, according to the present invention, controlled based, among others, on the spring constant $k$. The spring constant $k$ is related to a torsional compliance in the powertrain. In many applications, the spring constant $k$ is dominated by the spring constant $k_{drive}$ for the drive shafts 104, 105, related to the gear ratio of the powertrain, i.e. $k \approx \frac{k_{drive}}{i^2}$, where $i$ is the gear ratio.

In other applications, for which the spring constant $k$ is not dominated by the spring constant $k_{drive}$ of the drive shafts 104, 105, or for which the actual value of the spring constant $k$ is important and is not permitted to be approximated, a total spring constant $k_{tot}$ is determined for the powertrain, comprising torsional compliances for substantially all components of the powertrain.

The spring constant $k$ may be determined based on knowledge of which components are included in the powertrain and the torsional compliances of the included components, and how the components of the powertrain are configured. As the configuration of the components and their relation to the spring constant $k$ is known through measurements made during the construction and/or fitting of the powertrain, the spring constant $k$ may be determined.

The spring constant $k$ may also be determined by means of adaptive estimation when the vehicle is being driven. This estimation may then take place, at least partially continuously, during suitable driving sections. The estimate may be based on a difference $\Delta\omega$ in the rotational speed $\omega_{wheel}$ of the wheels 110, 111 and in $\omega_e$ of the engine/shaft 102 during a torque ramp, and on the gradient of the torque ramp, by determining the ratio between the derivative of the dynamic torque and the difference $\Delta\omega$; $k = \frac{\dot{T}q_{fw}}{\Delta\omega}$. For example, the spring constant for the derivatives 3000 Nm/s and the rotational speed difference 100 rpm is then $k = \frac{3000}{100} * \frac{\pi}{30} = 286$ Nm/row. The estimates may advantageously be carried out more than once, after which an average value for the results is determined.

According to one embodiment of the present invention, the speed control device 123 is arranged to control the engine speed $\omega_e$ for the engine by requesting at least one significant change $\Delta Tq_{demand}$ of the torque requested. In other words, the speed control device 123 may here indirectly control the engine speed $\omega_e$ by controlling the requested torque $Tq_{demand}$. Therefore, the engine speed $\omega_e$ is changed by means of making a significant change $\Delta Tq_{demand}$ to the requested torque.

A significant change $\Delta Tq_{demand}$ of the torque requested from the engine means, in this document, a change $\Delta Tq_{demand}$ of the torque by an amount which is within an interval corresponding to 10%-100% of a total available torque for the engine, wherein this change $\Delta Tq_{demand}$ takes place during a calculation period for a control device performing the control. The length of this calculation period may, for example, depend on a clock frequency for a processor in the control device. Control devices often determine updated control parameters/control values with a pre-determined frequency, i.e. a certain time interval, wherein the length of the calculation period may correspond to such a time period, sometimes also known as a "tick" for the control system.

The at least one significant change $\Delta Tq_{demand}$ of the requested torque, which is to provide the suitable engine speed $\omega_e$, should extend for a time period $t_{inertia}$ that is longer than one injection time period $t_{inj}$, required for the injection system to inject fuel into engine 101 and to ignite; $t_{inertia} > t_{inj}$. Hereby, it is ensured that there is time for several injections of fuel to be made, which is a condition for the at least one significant change $\Delta Tq_{demand}$ to take place. Thus, the requested torque here must be changed from a first value $Tq_{demand\_1}$ to a second value $Tq_{demand\_2}$; $\Delta Tq_{demand} = Tq_{demand\_2}$ - $Tq_{demand\_1}$; and then retain this second value $Tq_{demand\_2}$ for a time period longer than the injection time period $t_{inj}$. When the at least one significant change $\Delta Tq_{demand}$ thus corresponds to one or more peaks/leaps for the requested torque $Tq_{demand}$, these peaks/leaps must extend over a longer time period than the injection time period $t_{inj}$, in order to ensure the desired control with certainty.

Analyses have indicated that the powertrain of the vehicle has a natural oscillation, which is due to the components which are part of the powertrain and the configuration/composition of these components. This natural oscillation has a certain natural frequency $f_{driveline\_osc}$, which corresponds to a time period $t_{driveline\_osc}$ for the natural oscillation. According to one embodiment of the present invention, the insight into and knowledge of the powertrain's natural oscillations is used to determine a time period $t_{inertia}$, over which the at least one significant change $\Delta Tq_{demand}$ of the torque requested from the engine extends. This significant change $\Delta Tq_{demand}$ of the torque requested from the engine is here to extend for a time period $t_{inertia}$ that is longer than one injection period $t_{inj}$ and is shorter than a part $\frac{1}{X}$ of the cyclic duration $t_{driveline\_osc}$ for natural oscillations in the powertrain; $t_{injection} < t_{inertia} < \frac{1}{X} t_{driveline\_osc}$. Therefore, the requested torque here must be changed from a first value $Tq_{demand\_1}$ to a second value $Tq_{demand\_2}$;

$\Delta Tq_{demand} = Tq_{demand\_2}$ - $Tq_{demand\_1}$; and then retain this second value $Tq_{demand\_2}$ for a shorter time period than the part $\frac{1}{X}$ of the cyclic duration $t_{driveline\_osc}$.

If this part $\frac{1}{X}$ is suitably chosen, then the at least one significant change $\Delta Tq_{demand}$ of the requested torque may occur during a substantially linear part of the natural oscillation. For example, the part $\frac{1}{X}$ may be an eighth $\frac{1}{8}$; $t_{injection} < t_{inertia} < \frac{1}{8} t_{driveline\_osc}$; whereby the probability is great that the at least one significant change $\Delta Tq_{demand}$ occurs during a part of the cyclic duration $t_{driveline\_osc}$, wherein the sinus-shaped natural oscillation has a relatively straight/non-curved shape, for example in connection with its zero crossings.

In general, adjustments may be said to be more exact when a shorter part $\frac{1}{X}$ of the cyclic duration $t_{driveline\_osc}$ is used, that is to say, for greater values on x, as a more linear part of the natural oscillation is then used for the adjustment. However, the part $\frac{1}{X}$ of the cyclic duration $t_{driveline\_osc}$ cannot be made shorter indefinitely, as the amplitude difference $\Delta Tq_{demand}$ for the requested torque, which is required to achieve the change of the time derivative $\Delta \dot{T}q_{fw}$, increases, the shorter the part $\frac{1}{X}$ of the cyclic duration $t_{driveline\_osc}$ is, and as there are limits as to how short this amplitude difference may be, $\Delta Tq_{demand\_min} < \Delta Tq_{demand} < \Delta Tq_{demand\_max}$.

According to one embodiment, a size of the change of the engine speed $\omega_e$ is relative to a size for the significant change $\Delta Tq_{demand}$, i.e. the amplitude difference, of the torque requested from the engine and of a time $t_{inertia\_der}$ it takes to implement the change of the engine speed $\omega_e$.

This may be seen as if an area $A$ for a surface being delimited by the change $\Delta Tq_{demand}$ of the speed requested by the engine and by the time $t_{inertia\_der}$ it takes to perform the change of the engine speed $\omega_e$; $A = \Delta Tq_{demand} t_{inertia\_der}$; is required to change the engine speed $\omega_e$.

Therefore, in general a corresponding change of the engine speed $\omega_e$ may be achieved with a greater change $\Delta Tq_{demand}$ of the requested torque during a shorter period of time $t_{inertia\_der}$ as may be achieved with a smaller change $\Delta Tq_{demand}$ of the requested torque during a longer period of time $t_{inertia\_der}$, if the area $A$ of the surfaces that these changes delimit is the same size.

The time $t_{inertia\_der}$ it takes to change the engine speed $\omega_e$ is dependent on the time $t_{inertia}$ it takes to perform the significant change $\Delta Tq_{demand}$ of the torque requested from the engine 101. As there are limits as to how great the amplitude difference/the change of the requested torque may be, $\Delta Tq_{demand\_min} < \Delta Tq_{demand} < \Delta Tq_{demand\_max}$, and as a certain change of the engine speed $\omega_e$ requires a certain area $A$, the limitations of the amplitude difference/change of the requested torque, $\Delta Tq_{demand\_min} < \Delta Tq_{demand} < \Delta Tq_{demand\_max}$, sometimes mean that the time $t_{inertia}$ it takes to perform the significant change $\Delta Tq_{demand}$ is extended, which means that the time $t_{inertia\_der}$ it takes to change the speed $\omega_e$ is extended as well.

According to one embodiment, the control of the engine speed $\omega_e$ is achieved by at least one sequence of two

significant changes $\Delta Tq_{demand}$ of the torque requested from the engine, wherein the at least two significant changes $\Delta Tq_{demand}$ may comprise at least one negative change and at least one positive change. Using sequences of significant changes $\Delta Tq_{demand}$, such as torque peaks or similar, provides several degrees of freedom for the control. Furthermore, the area $A$ described above, which is used for rotating the play into position, and which is also a measure for how rapid the rotation will be, may be created in several different ways. This makes an optimised rotating the play into position possible. As the powertrain is specifically in the play, the forms that the torque changes take, such as torque peaks or similar, or what signs they have, is less important, as the torque will not reach the driving wheels anyway. Therefore, different combinations of torque changes $\Delta Tq_{demand}$ may here be selected substantially arbitrarily, without any significant regard having to be taken to the driving of the vehicle, whereby large possibilities for a rapid, or otherwise optimal, performance increase in the powertrain may be achieved.

The control according to the present invention may occur against a desired gradient/change/derivative $\dot{T}q_{fw\_req}$ for the dynamic torque, which corresponds to the rotational speed difference $\Delta\omega_{after}$ after the play. The desired derivative $\dot{T}q_{fw\_req}$ for the dynamic torque may be related to a driving mode used in the vehicle. Several such driving modes are defined for vehicles, for example an economic driving mode (ECO), a powerful driving mode (POWER) and a normal driving mode (NORMAL). The driving modes define, for example, how aggressively the vehicle will behave and what feeling the vehicle will convey when being driven, wherein this aggression is related to the derivative $\dot{T}q_{fw\_req}$ for the dynamic torque.

The desired derivative $\dot{T}q_{fw\_req}$ corresponding to the rotational speed difference $\Delta\omega_{after}$ after the play may be related to a calibration of at least one parameter related to a risk for further jerkiness of the powertrain. For example, a maximum value $\dot{T}q_{fw\_req\_max}$ for the desired derivative may be calibrated to a value which compensates for jerks in the powertrain when relatively large changes in the requested torque occur, for example when an accelerator pedal is depressed or released relatively quickly.

The desired derivative $\dot{T}q_{fw\_req}$ corresponding to the rotational speed difference $\Delta\omega_{after}$ after the play may be related to, and may provide, a ramping down after a shift operation in the gearbox.

The desired derivative $\dot{T}q_{fw\_req}$ corresponding to the rotational speed difference $\Delta\omega_{after}$ after the play may be related to, and may provide, a ramping down after an engaging of the clutch 106.

A person skilled in the art will realise that a method for the control of an engine speed $\omega_e$ for an engine in connection with a play, according to the present invention, may also be implemented in a computer program, which when executed in a computer will cause the computer to carry out the method. The computer program usually consists of a part of a computer program product 303, where the computer program product comprises a suitable digital storage medium on which the computer program is stored. Said computer readable medium consists of a suitable memory, e.g.: ROM (Read-Only Memory), PROM (Programmable Read-Only Memory), EPROM (Erasable PROM), Flash, EEPROM (Electrically Erasable PROM), a hard disk device, etc.

Figure 3 schematically shows a control device 300. The control device 300 comprises a calculation device 301, which may consist of essentially a suitable type of processor or microcomputer, e.g. a circuit for digital signal processing (Digital Signal Processor, DSP), or a circuit with a predetermined specific function (Application Specific Integrated Circuit, ASIC). The calculation device 301 is connected to a memory unit 302 installed in the control device 300, providing the calculation device 301 with e.g. the stored program code and/or the stored data which the calculation device 301 needs in order to be able to carry out calculations. The calculation device 301 is also set up to store interim or final results of calculations in the memory device 302.

Further, the control device 300 is equipped with devices 311, 312, 313, 314 for receipt and sending of input and output signals, respectively. These input and output signals may contain wave shapes, pulses, or other attributes, which may be detected as information by the devices 311, 313 for the receipt of input signals, and may be converted into signals that may be processed by the calculation unit 301. These signals are then provided to the calculation device 301. The devices 312, 314 for sending output signals are arranged to convert the calculation result from the calculation unit 301 into output signals, for transfer to other parts of the vehicle's control system, and/or the component(s) for which the signals are intended, for example to the engine.

Each one of the connections to the devices for receiving and sending of input and output signals may consist of one or several of a cable; a data bus, such as a CAN (Controller Area Network) bus, a MOST (Media Oriented Systems Transport) bus, or any other bus configuration; or of a wireless connection.

A person skilled in the art will realise that the above-mentioned computer may consist of the calculation device 301, and that the above-mentioned memory may consist of the memory device 302.

Generally, control systems in modern vehicles consist of a communications bus system, consisting of one or several communications buses to connect a number of electronic control devices (ECUs), or controllers, and different components localised on the vehicle. Such a control system may comprise a large number of control devices, and the responsibility for a specific function may be distributed among more than one control device. Vehicles of the type shown thus often comprise significantly more control devices than shown in Figures 1 and 3, as is well known to a person skilled in the art within the technology area.

The present invention, in the embodiment displayed, is implemented in the control device 300. The invention may, however, also be implemented wholly or partly in one or several other control devices, already existing in the vehicle, or in a control device dedicated to the present invention.

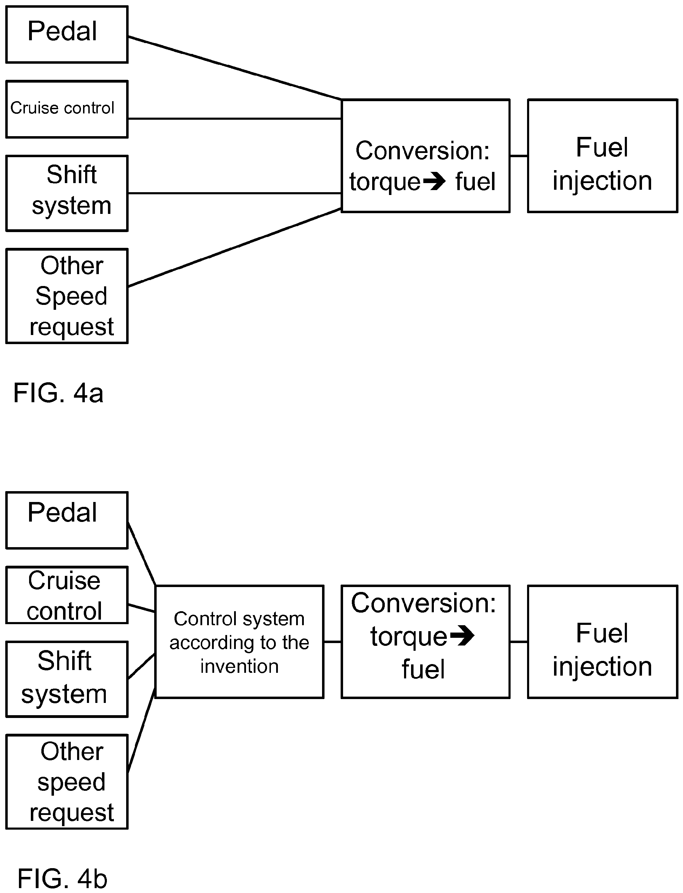

Figures 4a-b show a schematic block diagram for a prior art fuel injection system (Figure 4a) and a fuel injection system comprising a control system according to the present invention (Figure 4b).

In order to determine how much fuel to inject into the engine, information/indications of the torque requested has been used in vehicles for a long time, such as, for example, signals and/or mechanical indications from, for example a driver-controlled accelerator pedal, a cruise control and/or a shifting system. The amount of fuel to be injected into the engine is then calculated based on the information/indications. In other words, a direct reinterpretation/conversion of the information/indication into a corresponding amount of fuel is carried out. This fuel is then injected into the cylinders of the engine in order to operate the engine. This prior art procedure is shown schematically in Figure 4a. Thus, using prior art, a direct transfer of the information/indication from, for example, the accelerator pedal to the static torque achieved by the fuel injection is received and used. In other words, for example the indication from the accelerator pedal $Tq_{from\_acc\_pedal}$, is here directly used to calculate the requested torque $Tq_{demand}$;

$$Tq_{demand} = Tq_{from\_acc\_pedal} \cdot$$

When the present invention is used in the fuel injection system, a regulator/control system is introduced, as illustrated in Figure 4b, i.e. the system according to the present invention, which is arranged for the control of a torque $Tq_{demand}$ requested from the engine in a vehicle, between the accelerator pedal, the cruise control and/or the shifting system, and the conversion of the torque to fuel. Thus, the regulator/control system, which achieves the requested/desired behaviour/profile for the dynamic torque, is comprised in this system according to the present invention. It is thus this dynamic torque which is calculated/converted to the amount of fuel to be injected into the engine during combustion. In other words, the indication from the accelerator pedal $Tq_{from\_acc\_pedal}$ is here first transformed into a torque request for the dynamic torque, for example by means of the use of an equation, with the indication from the accelerator pedal $Tq_{from\_acc\_pedal}$ introduced into the equation: $Tq_{demand} = Tq_{fw\_pres} + t_{delay\_total} \frac{Tq_{from\_acc\_pedal} - Tq_{fw\_pres}}{\tau}$,

whereat fuel corresponding to this torque request $Tq_{demand}$ will be injected into the engine. Here, $Tq_{fw\_pres}$ is the current value for the dynamic torque. The total delay time $t_{delay\_total}$ corresponds to the time it takes from the determining of at least one parameter value until a change in the dynamic torque $Tq_{fw}$, based on the determined at least one parameter value, has been performed. The calibration parameter $\tau$ is related to a settling in period for the control/regulator and has the time dimension. The calibration parameter $\tau$ may be set to a smaller value if a quicker settling in is desirable, and to a greater value if a slower settling in is desirable.

Other adjustment equations could also have been used in the same manner, as the person skilled in the art will realise. This means that the current dynamic torque $Tq_{fw\_pres}$ according to the present invention is adjusted to the indication from the accelerator pedal $Tq_{from\_acc\_pedal}$. When the present invention is used, the accelerator pedal, the cruise control, the shift system or another possible torque requester may be used, in order to request and/or provide a dynamic torque, rather than the static torque requested in prior art systems (Figure 4a).

In this document, devices are often described as being arranged to carry out steps in the method according to the invention. This also comprises the devices being adapted and/or set up to carry out these method steps.

The present invention is not limited to the embodiments of the invention described above, but relates to and comprises all embodiments within the protected scope of the enclosed independent claims.

Claims

1. System for the control of an engine speed $\omega_e$ for an engine (101) in connection with a play in a powertrain in a vehicle (100), **characterised by**:

- a first determining device (121) arranged for the determining of a current rotational speed difference $\Delta\omega_{pres}$ between a first end of said powertrain in said vehicle (100), rotating with a first rotational speed $\omega_1$, and a second end of said powertrain, rotating with a second rotational speed $\omega_2$;
- a second determining device (122) arranged for the determining of a rotational speed difference $\Delta\omega_{after}$ which is to prevail between said first end and said second end after said play, wherein said rotational speed difference $\Delta\omega_{after}$ after said play is determined based on a spring constant $k$, related to a torsional compliance in said powertrain;
- a speed control device (123) arranged for the control of said engine speed $\omega_e$ for said engine (101) during a time period $T_{glapp}$ when said play in said powertrain is present, wherein said control of said engine speed $\omega_e$ for the said engine (101) is based on said current rotational speed difference $\Delta\omega_{pres}$ and on said determined rotational speed difference $\Delta\omega_{after}$ after said play.

2. System according to claim 1, wherein said first rotational speed $\omega_1$ corresponds to an engine speed $\omega_e$ for said engine (101); $\omega_1 = \omega_e$.

3. System according to any of claims 1-2, wherein said second rotational speed $\omega_2$ corresponds to a geared rotational speed $\omega_{wheel}$ for at least one driving wheel in said vehicle (100); $\omega_2 = \omega_{wheel}$.

4. System according to any of claims 1-3, wherein said spring constant $k$ is one of the group of:

   - a spring constant $k_{drive}$ for driving shafts (104, 105) in said vehicle (100), related to a gear ratio $i$ for said powertrain, which dominates said spring constant $k$ for said powertrain; and
   - a total spring constant $k_{tot}$ for said powertrain.

5. System according to any of claims 1-4, wherein said system comprises a third determining device arranged for the determining of said spring constant $k$ by means of one or more of the group:

   - a calculation based on a configuration of one or more components in said powertrain, wherein a relation to said spring constant $k$ is known for said one or more components; and
   - an, at least in part, continuously adaptive estimation, which estimates said spring constant $k$ during the driving of said vehicle (100).

6. System according to any of claims 1-5, wherein the following steps are performed in accordance with a shift operation in a gearbox in said vehicle (100):

   - engaging of a target gear, wherein said engine speed $\omega_e$ for said engine (101) is substantially synchronous with an rotational speed $\omega_{e\_new\_gear}$ for said target gear;
   - control of said engine speed $\omega_e$ for said engine (101) to an engine speed which results in said rotational speed difference $\Delta\omega_{after}$, which has to prevail after said play; and
   - rotating said play into position by means of said rotational speed difference $\omega_{after}$ to prevail after said play.

7. System according to any of claims 1-6, wherein said rotational speed difference $\Delta\omega_{after}$ that is to prevail between said first end and said second end of said powertrain after said play, is provided after said play by said control of said engine speed $\omega_e$ for said engine (101), wherein a ramping of a dynamic torque $Tq_{fw}$, which is provided by said engine (101) to its output shaft (102), is achieved, wherein said ramping has a gradient that is substantially proportional to said speed difference $\Delta\omega_{after}$.

8. System according to any of claims 1-7, wherein said play precedes one or more of:

   - a ramping up or a ramping down of a dynamic torque $Tq_{fw}$ that said engine (101) provides to its output shaft (102) after a shift operation in a gearbox (103) in said vehicle (100); and
   - a ramping up of a dynamic torque $Tq_{fw}$ that said engine (101) provides to its output shaft (102) after a closing of a clutch (106) in said vehicle (100).

9. System according to any of claims 1-8, wherein said control of said engine speed $\omega_e$ for said engine (101) is achieved by means of at least one significant change $\Delta Tq_{demand}$ of the torque requested from said engine (101).

10. System according to claim 9, wherein said engine speed $\omega_e$ for said engine (101) indirectly is controlled by said requested torque $Tq_{demand}$.

11. System according to any of claims 1-10, wherein said control of said engine speed $\omega_e$ for said engine (101) is achieved by means of at least one sequence of at least two significant changes $\Delta Tq_{demand}$ of the torque requested from said engine (101).

**12.** System according to claim 11, wherein said at least two significant changes $\Delta Tq_{demand}$ comprise at least one negative change and at least one positive change.

**13.** System according to any of claims 9-12, wherein each of said at least one significant change $\Delta Tq_{demand}$ is of a size within a range corresponding to 10%-100% of a total available torque for said engine (101), during a calculation period for a control device which performs said control.

**14.** System according to any of claims 9-13, wherein each of said at least one significant change $\Delta Tq_{demand}$ of the torque requested from said engine (101) extends for a time period $t_{inertia}$, which is longer than an injection period $t_{inj}$ and is shorter than a part $\frac{1}{X}$ of a cyclic time $t_{driveline\_osc}$ for a natural oscillation in said powertrain;

$$t_{inj} < t_{inertia} < \frac{1}{x} t_{driveline\_osc}.$$

**15.** System according to any of claims 1-14, wherein said time period $T_{glapp}$, during which said play prevails in said powertrain, starts at a point in time when said engine (101) ceases to provide a dynamic torque $Tq_{fw}$ to its output shaft (102).

**16.** Method for the control of an engine speed $\omega_e$ for an engine (101) in connection with a play in a powertrain in vehicle (100), **characterised by**:

- determining of a current rotational speed difference $\Delta\omega_{pres}$ between a first end of said powertrain in said vehicle (100), rotating with a first rotational speed $\omega_1$, and a second end of said powertrain, rotating with a second rotational speed $\omega_2$;
- determining of a rotational speed difference $\Delta\omega_{after}$ that is to prevail between said first end and said second end after said play, wherein said rotational speed difference $\Delta w_{after}$ after said play is determined based on a spring constant $k$ related to a torsional compliance in said powertrain;
- control of said engine speed $\omega_e$ for said engine (101) for a time period $T_{glapp}$ when said play in said powertrain prevails, wherein said control of said engine speed $\omega_e$ for said engine (101) is based on said current rotational speed difference $\Delta\omega_{pres}$ and on said determined rotational speed difference $\Delta\omega_{after}$ after said play.

**17.** Method according to claim 16, wherein said first rotational speed $\omega_1$ corresponds to an engine speed $\omega_e$ for said engine (101) ; $\omega_1 = \omega_e$.

**18.** Method according to any of claims 16-17, wherein said second rotational speed $\omega_2$ corresponds to a geared speed $\omega_{wheel}$ of at least one driving wheel in said vehicle (100); $\omega_2 = \omega_{wheel}$.

**19.** Method according to any of claims 16-18, wherein said spring constant $k$ is one of the group of:

- a spring constant $k_{drive}$ for driving shafts (104, 105) in said vehicle (100), related to a gear ratio $i$ for said powertrain, which dominates said spring constant $k$ for said powertrain; and
- a total spring constant $k_{tot}$ for said powertrain.

**20.** Method according to any of claims 16-19, wherein said spring constant $k$ is determined by means of one or several of the group:

- a calculation based on a configuration of one or more components in said powertrain, wherein a relation to said spring constant $k$ is known for said one or more components; and
- an, at least in part, continuously adaptive estimation, which estimates said spring constant $k$ during the driving of said vehicle (100).

**21.** Method according to any of claims 16-20, wherein the following steps are performed in connection with a shift operation in a gearbox (103) in said vehicle (100):

- engaging of a target gear, when said engine speed $\omega_e$ for said engine (101) substantially is synchronous with a rotational speed $\omega_{eng\_new\_gear}$ for said target gear;
- control of said engine speed $\omega_e$ for said engine (101) to an engine speed which results in said rotational speed

difference $\Delta\omega_{after}$, which has to prevail after said play; and

- rotation into position of said play, by means of said rotational speed difference $\Delta\omega_{after}$ to prevail after said play.

22. Method according to any of claims 16-21, wherein said rotational speed difference $\Delta\omega_{after}$ that has to prevail between said first end and said second end after said play, is provided after said play, by said control of said engine speed $\omega_e$ for said engine (101), whereby a ramping of a dynamic torque $Tq_{fw}$, which is provided by said engine (101) to its output shaft (102) is achieved, wherein said ramping has a gradient that is substantially proportional to said rotational speed difference $\Delta\omega_{after}$.

23. Method according to any of claims 16-22, wherein said play is preceding any one of:

- a ramping up or a ramping down of a dynamic torque $Tq_{fw}$, which said engine (101) provides to its output shaft (102) after shift operation in a gearbox (103) in said vehicle (100); and
- a ramping up of a dynamic torque $Tq_{fw}$, which said engine (101) provides to its output shaft (102) after an engaging of a clutch (106) in said vehicle (100).

24. Method according to any of claims 16-23, wherein said control of said engine speed $\omega_e$ for said engine (101) is achieved by means of at least one significant change $\Delta Tq_{demand}$ of the torque requested from said engine (101).

25. Method according to claim 24, wherein said engine speed $\omega_e$ for said engine (101) indirectly is controlled by said requested torque $Tq_{demand}$.

26. Method according to any of claims 16-25, wherein said control of said engine speed $\omega_e$ for said engine (101) is achieved by means of at least one sequence of at least two significant changes $\Delta Tq_{demand}$ of the torque requested from said engine (101).

27. Method according to claim 26, wherein said at least two significant changes $\Delta Tq_{demand}$ comprise at least one negative change and at least one positive change.

28. Method according to any of claims 24-27, wherein each of said at least one significant change $\Delta Tq_{demand}$ is of a size within a range corresponding to 10%-100% of a total available torque for said engine (101), during a calculation period for a control device, which performs said control.

29. Method according to any of claims 24-28, wherein each of said at least one significant change $\Delta Tq_{demand}$ of the torque requested from said engine (101) extends for a time period $t_{inertia}$, which is longer than an injection period $t_{inj}$ and is shorter than a part $\frac{1}{X}$ of a cyclic time $t_{driveline\_osc}$ for a natural oscillation in said powertrain;

$$t_{inj} < t_{inertia} < \frac{1}{x} t_{driveline\_osc}.$$

30. Method according to any of claims 16-29, wherein said time period $T_{glapp}$, during which said play prevails in said powertrain, starts at a point in time when said engine (101) ceases to provide a dynamic torque $Tq_{fw}$ to its output shaft (102).

31. Computer program comprising a program code which, when said program code is executed in a computer, achieves that said computer executes the method according to any of claims 1-30.

32. Computer program product comprising a computer-readable medium and a computer program according to claim 31, said computer program being comprised in said computer readable medium.

**Patentansprüche**

1. System zum Steuern einer Motordrehzahl $\omega_e$ eines Motors (101) in Verbindung mit einem Spiel in einem Antriebsstrang in einem Fahrzeug (100), **gekennzeichnet durch**:

- eine erste Bestimmungsvorrichtung (121), welche angeordnet ist, um eine aktuelle Drehgeschwindigkeit-

Differenz $\Delta\omega_{pres}$ zwischen einem ersten Ende des Antriebsstrangs in dem Fahrzeug (100), welches mit einer ersten Drehgeschwindigkeit $\omega_1$ rotiert, und einem zweiten Ende des Antriebsstranges zu bestimmen, welches mit einer zweiten Drehgeschwindigkeit $\omega_2$ rotiert;

- eine zweite Bestimmungsvorrichtung (122), welche angeordnet ist, um eine Drehgeschwindigkeit-Differenz $\Delta\omega_{after}$ zu bestimmen, welche zwischen dem ersten und dem zweiten Ende nach dem Spiel zu herrschen hat, wobei die Drehgeschwindigkeit-Differenz $\Delta\omega_{after}$ nach dem Spiel auf Basis einer Federkonstanten k bestimmt wird, welche mit einer Drehmomenterfüllung in dem Antriebsstrang in Beziehung steht;

- eine Geschwindigkeitssteuervorrichtung (123), welche angeordnet ist, um die Motordrehzahl $\omega_e$ des Motors (101) während eines Zeitintervalls $T_{glapp}$ zu steuern, wenn das Spiel in dem Antriebsstrang vorhanden ist, wobei die Steuerung der Motordrehzahl $\omega_e$ des Motors (101) auf der aktuellen Drehgeschwindigkeit -Differenz $\Delta\omega_{pres}$ und auf Basis der bestimmten Drehgeschwindigkeit -Differenz $\Delta\omega_{after}$ nach dem Spiel basiert.

2. System nach Anspruch 1, wobei die erste Drehgeschwindigkeit $\omega_1$ einer Motordrehzahl $\omega_e$ des Motors (101) entspricht; $\omega_1 = \omega_e$.

3. System nach einem der Ansprüche 1 -2, wobei die zweite Drehgeschwindigkeit $\omega_2$ einer ausgerichteten Drehgeschwindigkeit $\omega_{wheel}$ für mindestens ein fahrendes Rad an dem Fahrzeug (100) entspricht; $\omega_2 = \omega_{wheel}$.

4. System nach einem der Ansprüche 1-3, wobei die Federkonstante k eine aus der folgenden Gruppe ist:

   - eine Federkonstante $k_{drive}$ für Antriebswellen (104, 105) in dem Fahrzeug (100), welche zu einer Getriebeübersetzung i des Antriebsstranges in Beziehung steht, welche die Federkonstante k des Antriebsstranges dominiert; und
   - eine gesamte Federkonstante $k_{tot}$ des Antriebstranges.

5. System nach einem der Ansprüche 1-4, wobei das System eine dritte Bestimmungsvorrichtung umfasst, welche angeordnet ist, um die Federkonstante k mittels eines oder mehrerer Mittel aus der folgenden Gruppe zu bestimmen:

   - einer Berechnung basierend auf einer Konfiguration einer oder mehrerer Komponenten in dem Antriebsstrang, wobei eine Beziehung zu der Federkonstanten k für eine oder mehrere Komponenten bekannt ist; und
   - einer zumindest teilweisen kontinuierlichen adaptiven Abschätzung, welche die Federkonstante k während des Fahrens des Fahrzeugs (100) abschätzt.

6. System nach einem der Ansprüche 1-5, wobei die folgenden Schritte in Abstimmung mit einem Schaltvorgang in einem Getriebe des Fahrzeugs (100) durchgeführt werden:

   - Einlegen eines Zielganges, wobei die Drehgeschwindigkeit $\omega_e$ des Motors (101) im Wesentlichen synchron mit einer Motordrehzahl $\omega_{e\_new\_gear}$ des Zielganges ist;
   - Steuern der Motordrehzahl $\omega_e$ des Motors (101) bis zu einer Motordrehzahl, welche zu der Drehgeschwindigkeit -Differenz $\Delta\omega_{after}$ führt, welche nach dem Spiel zu herrschen hat; und
   - Drehen des Spiels in Position mittels der Drehzahl-Differenz $\Delta\omega_{after}$, die nach dem Spiel herrschen soll.

7. System nach einem der Ansprüche 1-6, wobei die Drehgeschwindigkeit -Differenz $\Delta\omega_{after}$, welche zwischen dem ersten Ende und dem zweiten Ende des Antriebsstranges nach dem Spiel zu herrschen hat, nach dem Spiel durch das Steuern der Motordrehzahl $\omega_e$ des Motors (101) bereit gestellt wird, wobei ein Erhöhen eines dynamischen Drehmoments $Tq_{fw}$, welches durch den Motor (101) an seiner Antriebswelle (102) bereit gestellt wird, erreicht wird, wobei das Erhöhen einen Gradienten aufweist, welcher im Wesentlichen proportional zu der Drehgeschwindigkeit - Differenz $\Delta\omega_{after}$ ist.

8. System nach einem der Ansprüche 1-7, wobei dem Spiel eines oder mehreres vorangeht:

   - ein Verstärken oder ein Verringern eines dynamischen Drehmoments $Tq_{fw}$, welches der Motor (101) an seiner Antriebswelle (102) nach einem Schaltvorgang im Getriebe (103) des Fahrzeuges (100) bereitstellt; und
   - ein Verstärken eines dynamischen Drehmoments $Tq_{fw}$, welches der Motor (101) an seiner Antriebswelle (102) nach einem Schließen einer Kupplung (106) des Fahrzeuges (100) bereitstellt.

9. System nach einem der Ansprüche 1-8, wobei das Steuern der Motordrehzahl $\omega_e$ des Motors (101) durch mindestens eine signifikante Änderung $\Delta Tq_{demand}$ des Drehmomentes erreicht wird, welche von dem Motor (101) angefordert wird.

**10.** System nach Anspruch 9, wobei die Motordrehzahl $\omega_e$ des Motors (101) indirekt durch das angeforderte Drehmoment $Tq_{demand}$ gesteuert wird.

**11.** System nach einem der Ansprüche 1-10, wobei das Steuern der Motordrehzahl $\omega_e$ des Motors (101) durch mindestens eine Sequenz mindestens zweier signifikanter Änderungen $\Delta Tq_{demand}$ des Drehmomentes erreicht wird, welche von dem Motor (101) angefordert werden.

**12.** System nach Anspruch 11, wobei die mindestens zwei signifikanten Änderungen $\Delta Tq_{demand}$ mindestens eine negative Änderung und mindestens eine positive Änderung umfassen.

**13.** System nach einem der Ansprüche 9-12, wobei jede der mindestens einen signifikanten Änderung $\Delta Tq_{demand}$ während eines Berechnungsintervalls einer Steuerungsvorrichtung, welche das Steuern durchführt, eine Größe innerhalb eines Bereiches aufweist, welche 10%-100% des gesamten verfügbaren Drehmomentes des Motors (101) entspricht.

**14.** System nach einem der Ansprüche 9-13, wobei jede der mindestens einen signifikanten Änderung $\Delta Tq_{demand}$ des Drehmomentes, welche von dem Motor (101) angefordert wird, sich über ein Zeitintervall $t_{inertia}$ erstreckt, welches länger als ein Einspritzintervall $t_{inj}$ und kürzer als ein Teil 1/x einer zyklischen Zeit $t_{driveline\_ocs}$ einer natürlichen Oszillation in dem Antreibsstrang ist; $t_{inj} < t_{inertia} < (1/x)\, t_{driveline\_ocs}$.

**15.** System nach einem der Ansprüche 1-14, wobei das Zeitintervall $T_{glapp}$, während welchem das Spiel in dem Antriebsstrang herrscht, zu einem Zeitpunkt startet, wenn der Motor (101) aufhört, ein dynamisches Drehmoment $Tq_{fw}$ an seiner Antriebswelle (102) bereit zu stellen.

**16.** Verfahren zum Steuern einer Motordrehzahl $\omega_e$ eines Motors (101) in Verbindung mit einem Spiel in einem Antriebsstrang in einem Fahrzeug (100), **gekennzeichnet durch**:

- Bestimmen einer aktuellen Drehgeschwindigkeit -Differenz $\Delta\omega_{pres}$ zwischen einem ersten Ende des Antriebsstrangs in dem Fahrzeug (100), welches mit einer ersten Drehgeschwindigkeit $\omega_1$ rotiert, und einem zweiten Ende des Antriebsstranges, welches mit einer zweiten Drehgeschwindigkeit $\omega_2$ rotiert;
- Bestimmen einer Drehzahl-Differenz $\Delta\omega_{after}$, welche zwischen dem ersten und dem zweiten Ende nach dem Spiel zu herrschen hat, wobei die Drehgeschwindigkeit - Differenz $\Delta\omega_{after}$ nach dem Spiel auf Basis einer Federkonstanten k bestimmt wird, welche mit einer Drehmomenterfüllung in Beziehung steht;
- Steuern der Motordrehzahl $\omega_e$ des Motors (101) während eines Zeitintervalls $T_{glapp}$, wenn das Spiel in dem Antriebsstrang vorhanden ist, wobei die Steuerung der Motordrehzahl $\omega_e$ des Motors (101) auf der aktuellen Drehgeschwindigkeit -Differenz $\Delta\omega_{pres}$ und auf Basis der bestimmten Drehgeschwindigkeit -Differenz $\Delta\omega_{after}$ nach dem Spiel basiert.

**17.** Verfahren nach Anspruch 16, wobei die erste Drehgeschwindigkeit $\omega_1$ einer Motordrehzahl $\omega_e$ des Motors (101) entspricht; $\omega_1 = \omega_e$.

**18.** Verfahren nach einem der Ansprüche 16 -17, wobei die zweite Drehgeschwindigkeit $\omega_1$ einer ausgerichteten Drehgeschwindigkeit $\omega_{wheel}$ für mindestens ein fahrendes Rad an dem Fahrzeug (100) entspricht; $\omega_2 = \omega_{wheel}$.

**19.** Verfahren nach einem der Ansprüche 16-18, wobei die Federkonstante k eine aus der folgenden Gruppe ist:

- eine Federkonstante $k_{drive}$ für Antriebswellen (104, 105) in dem Fahrzeug (100), welche zu einer Getriebeübersetzung i des Antriebstranges in Beziehung steht, welche die Federkonstante k des Antriebstranges dominiert, und
- eine gesamte Federkonstante $k_{tot}$ des Antriebstranges.

**20.** Verfahren nach einem der Ansprüche 16-19, wobei die Federkonstante k mittels eines oder mehrerer Mittel aus der folgenden Gruppe bestimmt wird:

- einer Berechnung basierend auf einer Konfiguration einer oder mehrerer Komponenten in dem Antriebsstrang, wobei eine Beziehung zu der Federkonstanten k für eine oder mehrere Komponenten bekannt ist; und

- einer zumindest teilweisen kontinuierlichen adaptiven Abschätzung, welche die Federkonstante k während des Fahrens des Fahrzeugs (100) abschätzt.

21. Verfahren nach einem der Ansprüche 16-20, wobei die folgenden Schritte in Verbindung mit einem Schaltvorgang in einem Getriebe des Fahrzeugs (100) durchgeführt werden:

- Einlegen eines Zielganges, wobei die Motordrehzahl $\omega_e$ des Motors (101) im Wesentlichen synchron mit einer Drehgeschwindigkeit $\omega_{e\_new\_gear}$ des Zielganges ist;
- Steuern der Motordrehzahl $\omega_e$ des Motors (101) bis zu einer Motordrehzahl, welche zu der Drehgeschwindigkeit -Differenz $\Delta\omega_{after}$ führt, welche nach dem Spiel zu herrschen hat; und
- Drehung des Spiels in Position mittels der Drehgeschwindigkeit -Differenz $\Delta\omega_{after}$, um nach dem Spiel zu herrschen.

22. Verfahren nach einem der Ansprüche 16-21, wobei die Drehgeschwindigkeit - Differenz $\Delta\omega_{after}$, welche zwischen dem ersten Ende und dem zweiten Ende des Antriebsstranges nach dem Spiel zu herrschen hat, nach dem Spiel durch das Steuern der Motordrehzahl $\omega_e$ des Motors (101) bereit gestellt wird, wodurch ein Erhöhen eines dynamischen Drehmoments $Tq_{fw}$, welches durch den Motor (101) an seiner Antriebswelle (102) bereit gestellt wird, erreicht wird, wobei das Erhöhen einen Gradienten aufweist, welcher im Wesentlichen proportional zu der Drehgeschwindigkeit - Differenz $\Delta\omega_{after}$ ist.

23. Verfahren nach einem der Ansprüche 16-22, wobei dem Spiel irgendeines des Folgenden vorangeht:

- ein Verstärken oder ein Verringern eines dynamischen Drehmoments $Tq_{fw}$, welches der Motor (101) an seiner Antriebswelle (102) nach einem Schaltvorgang im Getriebe (103) des Fahrzeuges (100) bereitstellt; und
- ein Verstärken eines dynamischen Drehmoments $Tq_{fw}$, welches der Motor (101) an seiner Antriebswelle (102) nach einem Kuppeln einer Kupplung (106) des Fahrzeuges (100) bereitstellt.

24. Verfahren nach einem der Ansprüche 16-23, wobei das Steuern der Motordrehzahl $\omega_e$ des Motors (101) durch mindestens eine signifikante Änderung $\Delta Tq_{demand}$ des Drehmomentes erreicht wird, welche von dem Motor (101) angefordert wird.

25. Verfahren nach Anspruch 24, wobei die Motordrehzahl $\omega_e$ des Motors (101) indirekt durch das angeforderte Drehmoment $Tq_{demand}$ gesteuert wird.

26. Verfahren nach einem der Ansprüche 16-25, wobei das Steuern der Motordrehzahl $\omega_e$ des Motors (101) durch mindestens eine Sequenz mindestestens zweier signifikanter Änderungen $\Delta Tq_{demand}$ des Drehmomentes erreicht wird, welche von dem Motor (101) angefordert werden.

27. Verfahren nach Anspruch 26, wobei die mindestens zwei signifikanten Änderungen $\Delta Tq_{demand}$ mindestens eine negative Änderung und mindestens eine positive Änderung umfassen.

28. Verfahren nach einem der Ansprüche 24-27, wobei jede der mindestens einen signifikanten Änderung $\Delta Tq_{demand}$ während eines Berechnungsintervalls einer Steuerungsvorrichtung, welche das Steuern durchführt, eine Größe innerhalb eines Bereiches aufweist, welche 10%-100% des gesamten verfügbaren Drehmomentes des Motors (101) entspricht.

29. Verfahren nach einem der Ansprüche 24-28, wobei jede der mindestens einen signifikanten Änderung $\Delta Tq_{demand}$ des Drehmomentes, welche von dem Motor (101) angefordert wird, sich über ein Zeitintervall $t_{inertia}$ erstreckt, welches länger als ein Einspritzintervall $t_{inj}$ und kürzer als ein Teil 1/x einer zyklischen Zeit $t_{driveline\_ocs}$ einer natürlichen Oszillation in dem Antriebsstrang ist; $t_{inj} < t_{inertia} < (1/x)\, t_{driveline\_ocs}$.

30. Verfahren nach einem der Ansprüche 16-29, wobei das Zeitintervall $T_{glapp}$, während welchem das Spiel in dem Antriebsstrang herrscht, zu einem Zeitpunkt startet, wenn der Motor (101) aufhört, ein dynamische Drehmoment $Tq_{fw}$ an seiner Antriebswelle (102) bereit zu stellen.

31. Computerprogramm, umfassend einen Programmcode, welcher dann, wenn der Programcode an einem Computer ausgeführt wird, erreicht, dass der Computer ein Verfahren nach einem der Ansprüche 1-30 ausführt.

**32.** Computerprogrammprodukt, umfassend ein computer-lesbares Medium und ein Computerprogramm nach Anspruch 31, wobei das Computerprogram in dem computer-lesbaren Medium umfasst ist.

**Revendications**

**1.** Système pour la commande d'une vitesse $\omega_e$ d'un moteur (101) en liaison avec un jeu dans un groupe motopropulseur d'un véhicule (100), **caractérisé par** :

- un premier dispositif de détermination (121) prévu pour déterminer une différence de vitesse de rotation en cours $\Delta\omega_{pres}$ entre une première extrémité dudit groupe motopropulseur dans ledit véhicule (100), en rotation à une première vitesse de rotation $\omega_1$, et une seconde extrémité dudit groupe motopropulseur, en rotation à une seconde vitesse de rotation $\omega_2$;

- un second dispositif de détermination (122) prévu pour déterminer une différence de vitesse de rotation $\Delta\omega_{after}$ qui doit prévaloir entre ladite première extrémité et ladite seconde extrémité après ledit jeu, ladite différence de vitesse de rotation $\Delta\omega_{after}$ après ledit jeu étant déterminée sur la base d'une constante de rappel $k$, liée à une élasticité torsionnelle dans ledit groupe motopropulseur ;

- un dispositif de commande de vitesse (123) prévu pour la commande de ladite vitesse $\omega_e$ dudit moteur (101) pendant un laps de temps $T_{glapp}$ au cours duquel ledit jeu est présent dans le groupe motopropulseur, ladite commande de ladite vitesse $\omega_e$ dudit moteur (101) étant basée sur ladite différence de vitesse de rotation en cours $\Delta\omega_{pres}$ et sur ladite différence de vitesse de rotation déterminée $\Delta\omega_{after}$ après ledit jeu.

**2.** Système selon la revendication 1, dans lequel ladite première vitesse de rotation $\omega_1$ correspond à une vitesse $\omega_e$ dudit moteur (101); $\omega_1 = \omega_e$.

**3.** Système selon l'une quelconque des revendications 1 ou 2, dans lequel ladite seconde vitesse de rotation $\omega_2$ correspond à une vitesse de rotation démultipliée $\omega_{wheel}$ d'au moins une roue motrice dans ledit véhicule (100) ; $\omega_2 = \omega_{wheel}$.

**4.** Système selon l'une quelconque des revendications 1 à 3, dans lequel ladite constante de rappel $k$ est l'une du groupe comprenant :

- une constante de rappel $k_{drive}$ pour les arbres moteur (104, 105) dans ledit véhicule (100), liée à un rapport de vitesse i dudit groupe motopropulseur, qui domine ladite constante de rappel $k$ pour ledit groupe motopropulseur ; et

- une constante de rappel totale $k_{tot}$ pour ledit groupe motopropulseur.

**5.** Système selon l'une quelconque des revendications 1 à 4, dans lequel ledit système comprend un troisième dispositif de détermination prévu pour la détermination de ladite constante de rappel $k$ à l'aide d'un ou plusieurs du groupe comprenant :

- un calcul sur la base d'une configuration d'un ou plusieurs 15composants dans ledit groupe motopropulseur, une relation avec ladite constante de rappel $k$ étant connue pour lesdits un ou plusieurs composants ; et

- une estimation, au moins en partie adaptative en continu, qui estime ladite constante de rappel $k$ pendant la conduite du véhicule (100).

**6.** Système selon l'une quelconque des revendications 1 à 5, dans lequel les étapes suivantes sont exécutées en fonction d'une opération de changement de vitesse dans une boîte de vitesses dudit véhicule (100) :

- engagement d'un rapport cible, ladite vitesse $\omega_e$ dudit moteur 101) étant sensiblement synchrone avec une vitesse de rotation $\omega e\_new\_gear$ pour ledit rapport cible ;

- commande de ladite vitesse $\omega_e$ dudit moteur (101) pour atteindre une vitesse moteur qui génère ladite différence de vitesse de rotation $\Delta\omega_{after}$, laquelle doit prévaloir après ledit jeu ; et

- rotation dudit jeu en position à l'aide de ladite différence de vitesse de rotation $\Delta\omega_{after}$ devant prévaloir après ledit jeu.

**7.** Système selon l'une quelconque des revendications 1 à 6, dans lequel ladite différence de vitesse de rotation $\Delta\omega_{after}$ devant prévaloir 35entre ladite première extrémité et ladite seconde extrémité dudit groupe motopropulseur après ledit jeu est fournie après ledit jeu par ladite commande de ladite vitesse $\omega_e$ dudit moteur (101), une rampe d'un couple dynamique $T_{qfw}$, qui est fourni par ledit moteur (101) à son arbre de sortie (102), étant ainsi réalisée, ladite rampe ayant une pente sensiblement proportionnelle à ladite différence de vitesse $\Delta\omega_{after}$.

8. Système selon l'une quelconque des revendications 1 à 7, dans lequel ledit jeu précède une ou plusieurs des actions suivantes :

- une accélération ou une décélération d'un couple dynamique $T_{qfw}$ que ledit moteur (101) fournit à son arbre de sortie (102) après une opération de changement de vitesse dans une boîte de vitesses (103) dudit véhicule (100) ; et
- une accélération d'un couple dynamique $T_{qfw}$ que ledit moteur (101) fournit à son arbre de sortie (102) après une fermeture d'un embrayage (106) dans ledit véhicule (100).

9. Système selon l'une quelconque des revendications 1 à 8, dans lequel ladite commande de ladite vitesse $\omega_e$ dudit moteur (101) est opérée à l'aide d'au moins une modification importante $\Delta Tq_{demand}$ du couple demandé par ledit moteur (101).

10. Système selon la revendication 9, dans lequel ladite vitesse $\omega_e$ dudit moteur (101) est indirectement commandée par ledit couple demandé $\Delta Tq_{demand}$.

11. Système selon l'une quelconque des revendications 1 à 10, dans lequel ladite commande de ladite vitesse $\omega_e$ dudit moteur (101) est opérée à l'aide d'au moins une séquence d'au moins deux modifications importantes $\Delta Tq_{demand}$ du couple demandé par ledit moteur (101).

12. Système selon la revendication 11, dans lequel lesdites au moins deux modifications importantes $\Delta Tq_{demand}$ comprennent au moins une modification négative et au moins une modification positive.

13. Système selon l'une quelconque des revendications 9 à 12, dans lequel chaque au moins une modification importante $\Delta Tq_{demand}$ est d'un ordre de grandeur se situant dans la plage correspondant à 10%-100% d'un couple disponible total pour ledit moteur (101) pendant une période de calcul pour un dispositif de commande qui exécute ladite commande.

14. Système selon l'une quelconque des revendications 9 à 13, dans lequel chaque au moins une modification importante $\Delta Tq_{demand}$ du couple demandé par ledit moteur (101) s'étend sur un laps de temps $t_{inertia}$ qui est plus long qu'un temps d'injection $t_{inj}$ et plus court qu'une partie $1/x$ d'un temps cyclique $t_{driveline-osc}$ d'une oscillation naturelle dans ledit groupe motopropulseur ; $t_{inj} < t_{inertia} < \frac{1}{x} t_{driveline\_osc}$.

15. Système selon l'une quelconque des revendications 1 à 14, dans lequel ledit laps de temps $T_{glapp}$, durant lequel ledit jeu prévaut dans ledit groupe motopropulseur, démarre au moment où ledit moteur (101) cesse de fournir un couple dynamique $T_{qfw}$ à son arbre de sortie (102).

16. Procédé pour la commande d'une vitesse $\omega_e$ d'un moteur (101) en liaison avec un jeu dans le groupe motopropulseur d'un véhicule (100), **caractérisé par** les étapes suivantes :

- détermination d'une différence de vitesse de rotation en cours $\Delta\omega_{pres}$ entre une première extrémité dudit groupe motopropulseur dans ledit véhicule (100), en rotation à une première vitesse de rotation $\omega_1$, et une seconde extrémité dudit groupe motopropulseur, en rotation à une seconde vitesse de rotation $\omega_2$;
- détermination d'une différence de vitesse de rotation $\Delta\omega_{after}$, qui doit prévaloir entre ladite première extrémité et ladite seconde extrémité après ledit jeu, ladite différence de vitesse de rotation $\Delta\omega_{after}$ après ledit jeu étant déterminée sur la base d'une constante de rappel k, liée à une élasticité torsionnelle dans ledit groupe motopropulseur ;
- commande de ladite vitesse $\omega_e$ dudit moteur (101) pendant un laps de temps $T_{glapp}$ au cours duquel ledit jeu prévaut dans le groupe motopropulseur, ladite commande de ladite vitesse $\omega_e$ dudit moteur (101) étant basée sur ladite différence de vitesse de rotation en cours $\Delta\omega_{pres}$ et sur ladite différence de vitesse de rotation déterminée $\Delta\omega_{after}$ après ledit jeu.

**17.** Procédé selon la revendication 16, dans lequel ladite première vitesse de rotation $\omega_1$ correspond à une vitesse $\omega_e$ dudit moteur (101); $\omega_1 = \omega_e$.

**18.** Procédé selon l'une quelconque des revendications 16-17, dans lequel ladite seconde vitesse de rotation $\omega_2$ correspond à une vitesse démultipliée $\omega_{wheel}$ d'au moins une roue motrice dans ledit véhicule (100) ; $\omega_2 = \omega_{wheel}$.

**19.** Procédé selon l'une quelconque des revendications 16-18, dans lequel ladite constante de rappel $k$ est l'une du groupe comprenant :

- une constante de rappel $k_{drive}$ pour les arbres moteur (104, 105) dans ledit véhicule (100), liée à un rapport de vitesse i dudit groupe motopropulseur, qui domine ladite constante de rappel $k$ pour ledit groupe motopropulseur ; et
- une constante de rappel totale $k_{tot}$ pour ledit groupe motopropulseur.

**20.** Procédé selon l'une quelconque des revendications 16-19, dans lequel ladite constante de rappel $k$ est déterminée à l'aide d'un ou plusieurs du groupe comprenant :

- un calcul sur la base d'une configuration d'un ou plusieurs composants dudit groupe motopropulseur, une relation avec ladite constante de rappel $k$ étant connue pour lesdits un ou plusieurs composants ; et
- une estimation au moins en partie adaptative en continu, qui estime ladite constante de rappel $k$ pendant la conduite du véhicule (100).

**21.** Procédé selon l'une quelconque des revendications 16-20, dans lequel les étapes suivantes sont exécutées en liaison avec une opération de changement de vitesse dans une boîte de vitesses (103) dudit véhicule (100) :

- engagement d'un rapport cible lorsque ladite vitesse $\omega_e$ dudit moteur (101) est sensiblement synchrone avec une vitesse de rotation $\omega e\_new\_gear$ pour ledit rapport cible ;
- commande de ladite vitesse $\omega_e$ dudit moteur (101) pour atteindre une vitesse moteur qui génère ladite différence de vitesse de rotation $\Delta\omega_{after}$, laquelle doit prévaloir après ledit jeu ; et
- rotation dudit jeu en position à l'aide de ladite différence de vitesse de rotation $\Delta\omega_{after}$ devant prévaloir après ledit jeu.

**22.** Procédé selon l'une quelconque des revendications 16-21, dans lequel ladite différence de vitesse de rotation $\Delta\omega_{after}$ devant prévaloir entre ladite première extrémité et ladite seconde extrémité après ledit jeu est fournie après ledit jeu par ladite commande de ladite vitesse $\omega_e$ dudit moteur (101), une rampe d'un couple dynamique $T_{qfw}$, qui est fourni par ledit moteur (101) à son arbre de sortie (102), étant ainsi réalisée, ladite rampe ayant une pente sensiblement proportionnelle à ladite différence de vitesse $\Delta\omega_{after}$.

**23.** Procédé selon l'une quelconque des revendications 16-22, dans lequel ledit jeu précède une ou plusieurs des actions suivantes :

- une accélération ou une décélération d'un couple dynamique $Tqfw$ que ledit moteur (101) fournit à son arbre de sortie (102) après une opération de changement de vitesse dans une boîte de vitesses (103) dudit véhicule (100), et
- une accélération d'un couple dynamique $T_{qfw}$ que ledit moteur (101) fournit à son arbre de sortie (102) après une mise en prise d'un embrayage (106) dans ledit véhicule (100).

**24.** Procédé selon l'une quelconque des revendications 16-23, dans lequel ladite commande de ladite vitesse $\omega_e$ dudit moteur (101) est opérée à l'aide d'au moins une modification importante $\Delta Tq_{demand}$ du couple demandé par ledit moteur (101).

**25.** Procédé selon la revendication 24, dans lequel ladite vitesse $\omega_e$ dudit moteur (101) est indirectement commandée par ledit couple demandé $\Delta Tq_{demand}$.

**26.** Procédé selon l'une quelconque des revendications 16-25, dans lequel ladite commande de ladite vitesse $\omega_e$ dudit moteur (101) est opérée à l'aide d'au moins une séquence d'au moins deux modifications importantes $\Delta Tq_{demand}$ du couple demandé par ledit moteur (101).

**27.** Procédé selon la revendication 26, dans lequel lesdites au moins deux modifications importantes $\Delta Tq_{demand}$ comprennent au moins une modification négative et au moins une modification positive.

**28.** Procédé selon l'une quelconque des revendications 24-27, dans lequel chaque au moins une modification importante $\Delta Tq_{demand}$ est d'un ordre de grandeur se situant dans la plage correspondant à 10%-100% d'un couple total disponible pour ledit moteur (101) pendant une période de calcul pour un dispositif de commande qui exécute ladite commande.

**29.** Procédé selon l'une quelconque des revendications 24-28, dans lequel chaque au moins une modification importante $\Delta Tq_{demand}$ du couple demandé par ledit moteur (101) s'étend sur un laps de temps $t_{inertia}$ qui est plus long qu'un temps d'injection $t_{inj}$ et plus court qu'une partie $1/x$ d'un temps cyclique $t_{driveline-osc}$ d'une oscillation naturelle dans ledit groupe motopropulseur ; $t_{inj} < t_{inertia} < \frac{1}{x} t_{driveline\_osc}$.

**30.** Procédé selon l'une quelconque des revendications 16-29, dans lequel ledit laps de temps $T_{glapp}$, au cours duquel ledit jeu prévaut dans ledit groupe motopropulseur, démarre au moment où ledit moteur 101) cesse de fournir un couple dynamique $T_{qfw}$ à son arbre de sortie (102).

**31.** Programme informatique comprenant un code de programme qui, lorsque ledit code de programme est exécuté dans un ordinateur, assure l'exécution par ledit ordinateur du procédé selon l'une quelconque des revendications 1 à 30.

**32.** Produit programme informatique comprenant un support lisible par ordinateur et un programme informatique selon la revendication 31, ledit programme informatique étant compris dans ledit support lisible par ordinateur.

FIG. 1

EP 2 963 273 B1

```
┌─────────────────────────────────┐
│            [201]                │
│     Determine Δω_pres           │
│                                 │
└─────────────────────────────────┘
                │
                ▼
┌─────────────────────────────────┐
│            [202]                │
│     Determine Δω_after          │
│     Based on: spring            │
│       constant k                │
│                                 │
└─────────────────────────────────┘
                │
                ▼
┌─────────────────────────────────┐
│            [203]                │
│       Control ω_e               │
│       based on:                 │
│        -  Δω_pres               │
│        -  Δω_after              │
│                                 │
└─────────────────────────────────┘
```

Fig. 2

Fig. 3

Max reverse

In the play

Max forward

Fig. 6

FIG. 4a

FIG. 4b

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011003544 A